(19) **Europäisches Patentamt**
**European Patent Office**
**Office européen des brevets**

(11) **EP 4 621 355 A1**

(12) **EUROPEAN PATENT APPLICATION**
published in accordance with Art. 153(4) EPC

(43) Date of publication:
**24.09.2025 Bulletin 2025/39**

(21) Application number: **23891264.6**

(22) Date of filing: **17.10.2023**

(51) International Patent Classification (IPC):
**G01D 5/244** (2006.01)     **G01D 5/245** (2006.01)

(52) Cooperative Patent Classification (CPC):
**G01D 5/244; G01D 5/245**

(86) International application number:
**PCT/JP2023/037549**

(87) International publication number:
**WO 2024/106107 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.11.2022 JP 2022183453**
**27.09.2023 JP 2023166407**

(71) Applicant: DENSO CORPORATION
Kariya-city, Aichi 448-8661 (JP)

(72) Inventors:
• **MATSUMOTO Koichiro**
Kariya-city, Aichi 448-8661 (JP)
• **KIMURA Ayuna**
Kariya-city, Aichi 448-8661 (JP)
• **TAKASAKA Seiji**
Kariya-city, Aichi 448-8661 (JP)
• **ONODA Nagisa**
Kariya-city, Aichi 448-8661 (JP)

(74) Representative: **Kuhnen & Wacker**
**Patent- und Rechtsanwaltsbüro PartG mbB**
**Prinz-Ludwig-Straße 40A**
**85354 Freising (DE)**

(54) **POSITION DETECTION DEVICE**

(57) A position detection device that detects a position of a detection body (20, 100) includes a signal output unit (32, 33, 61, 62) that outputs a first signal (V1) and a second signal (V2), an arrangement unit (30, 10) that faces the detection body, and a signal processing unit (50) that calculates a detection body position. The signal processing unit corrects the first signal and the second signal to calculate a pre-correction detection body position, calculates a correction function based on an error of the pre-correction detection body position, and corrects the pre-correction detection body position using the correction function. The signal processing unit corrects the first signal and the second signal based on cases where a gap between the arrangement unit and the detection body is at a reference gap, one or different near gaps, and one or different far gaps. The signal processing unit derives a correction value used in the correction function for each of multiple sections of a detection range. Alternatively, the signal processing unit includes a signal correction unit (54) that corrects the first signal and the second signal, a position calculation unit (55) that calculates the pre-correction detection body position, and a section correction unit (56) that corrects the pre-correction detection body position for each of the multiple sections.

FIG. 14

# EP 4 621 355 A1

**Description**

CROSS REFERENCE TO RELATED APPLICATIONS

This application is based on and incorporates herein by reference Japanese Patent Application No. 2022-183453 filed on November 16, 2022, and Japanese Patent Application No. 2023-166407 filed on September 27, 2023.

TECHNICAL FIELD

The present disclosure relates to a position detection device.

BACKGROUND ART

In the related art, a linear position sensor that detects a position of a detection body based on a change in a magnetic field received from multiple magnets disposed on the detection body is known (for example, see Patent Literature 1). The linear position sensor includes a detection unit that acquires a sine signal and a cosine signal of a phase corresponding to positions of the multiple magnets in the moving detection body, and detects a position of the detection body based on the sine signal and the cosine signal acquired by the detection unit.

In the linear position sensor disclosed in Patent Literature 1, detection accuracy of a specific position is improved by disposing the multiple magnets in the detection body at irregular intervals or disposing the magnets at irregular heights to adjust the magnetic field received by the detection unit to be unbalanced.

PRIOR ART LITERATURE

PATENT LITERATURE

Patent Literature 1: JP 2022-016309 A

SUMMARY OF INVENTION

Intensive studies by the inventors have found that detection accuracy can be improved in a position detection device, like the linear position sensor described in Patent Literature 1, which detects the position of a detection body based on sine and cosine signals, without being limited to a specific position.

An object of the present disclosure is to provide a position detection device capable of improving detection accuracy.

According to an aspect of the present disclosure, a position detection device for detecting a position of a detection body. The position detection device includes a signal output unit, an arrangement unit and a signal processing unit. The signal output unit is configured to output a first signal having a sine wave shape corresponding to a position of the detection body, and a second signal different in phase from the first signal and having a cosine wave shape corresponding to the position of the detection body. The arrangement unit is provided with the signal output unit and faces the detection body in a state of being spaced apart from the detection body. The signal processing unit is configured to calculate, based on the first signal and the second signal, a detection body position which is a position of the detection body when the detection body is displaced in a predetermined detection range. The signal processing unit is configured to correct the first signal and the second signal. The signal processing unit is configured to calculate a pre-correction detection body position based on the corrected first signal and second signal. The pre-correction detection body position is the detection body position before correction. The signal processing unit is configured to calculate a correction function based on an error of the calculated pre-correction detection body position. The signal processing unit is configured to correct the pre-correction detection body position calculated for each of sections of the detection range using the correction function. An interval between the detection body and the arrangement unit in a facing direction in which the detection body and the arrangement unit face each other is defined as a gap. The gap that serves as a reference is defined as a reference gap. The gap smaller than the reference gap is defined as a near gap. The gap larger than the reference gap is defined as a far gap. The signal processing unit is configured to correct the first signal and the second signal such that each of errors of the pre-correction detection body position approach 0, the errors including errors occurring when the gap is at the reference gap, one or different near gaps, and one or different far gaps. The signal processing unit is configured to derive a correction value used in the correction function for each of the sections.

According to another aspect of the present disclosure, a position detection device for detecting a position of a detection body. The position detection device includes a signal output unit, an arrangement unit and a signal processing unit. The signal output unit is configured to output a first signal having a sine wave shape corresponding to a position of the detection body, and a second signal different in phase from the first signal and having a cosine wave shape corresponding to the position of the detection body. The arrangement unit is provided with the signal output unit and faces the detection body in a state of being spaced apart from the detection body. The signal processing unit is configured to calculate, based on the first signal and the second signal, a detection body position which is a position of the detection body when the detection body is displaced in a predetermined detection range. The signal processing unit includes a signal correction unit, a position calculation unit, and a section correction unit. The signal correction unit is configured to correct the first signal and the second signal. The position calculation unit is configured to calculate a pre-correction detection body position based on the first signal and the second signal corrected by the signal correction unit. The pre-correction detection body position is the detection body position before correction. The section correction unit is configured to calculate a correction function based on an error of the pre-correction detection body position calculated by the position calculation unit. The section correction unit is configured to correct the pre-correction detection body position calculated by the position calculation unit for each of sections of the detection range using the correction function. An interval between the detection body and the arrangement unit in a facing direction in which the detection body and the arrangement unit face each other is defined as a gap. The gap that serves as a reference is defined as a reference gap. The gap smaller than the reference gap is defined as a near gap. The gap larger than the reference gap is defined as a far gap. The signal correction unit is configured to correct the first signal and the second signal such that each of errors of the pre-correction detection body position approach 0, the errors including errors occurring when the gap is at the reference gap, one or different near gaps, and one or different far gaps. The section correction unit is configured to derive a correction value used in the correction function for each of the sections.

According to this, it is possible to reduce a detection error by deriving a correction term such that an error of the detection body position approaches 0 when the interval between the detection body and the arrangement unit is any one of the reference gap, the near gap, and the far gap. Accordingly, the detection accuracy of the position detection device can be improved.

A reference numeral with parentheses attached to each component and the like indicates an example of a corresponding relationship between the components and the like and specific components described in the embodiments described later.

BRIEF DESCRIPTION OF DRAWINGS

FIG. 1 is a schematic configuration diagram of a position detection device according to a first embodiment.
FIG. 2 is a cross-sectional view taken along a line II-II in FIG. 1.
FIG. 3 is a cross-sectional view taken along a line III-III in FIG. 1.
FIG. 4 is a diagram showing a substrate according to the first embodiment.
FIG. 5 is a block diagram of the position detection device according to the first embodiment.
FIG. 6 is a diagram showing an example of a waveform of a first voltage value generated in a first reception coil and a waveform of a second voltage value generated in a second reception coil according to the first embodiment.
FIG. 7 is a diagram showing details of an angle calculation unit in the block diagram of the position detection device according to the first embodiment.
FIG. 8 is a diagram showing an example of a waveform of a first voltage value generated in an ideal first reception coil and a waveform of a second voltage value generated in an ideal second reception coil.
FIG. 9 is a diagram showing a relative relationship between a mechanical angle and an electric angle.
FIG. 10 is a diagram showing an example of an error of a rotation angle.
FIG. 11 is a diagram showing an example of an error of the rotation angle before correction calculated by a position calculation unit according to the first embodiment.
FIG. 12 is a diagram showing that offsets of a first conversion signal and a second conversion signal changes according to a gap.
FIG. 13 is a diagram showing an example of an error of a correction rotation angle corrected by a section correction unit according to the first embodiment.
FIG. 14 is a block diagram of the position detection device according to the first embodiment.
FIG. 15 is a diagram showing a substrate according to a second embodiment.
FIG. 16 is a diagram showing a rotation member according to the second embodiment.
FIG. 17 is a diagram showing a position detection device and a detection body according to a third embodiment.
FIG. 18 is a block diagram of the position detection device according to the third embodiment.
FIG. 19 is a diagram showing an example of an error of a rotation angle calculated by a position calculation unit according to a fourth embodiment.

FIG. 20 is a diagram showing an example of an error of a correction rotation angle corrected by a section correction unit according to the fourth embodiment.

FIG. 21 is a diagram showing a substrate according to a fifth embodiment.

EMBODIMENTS FOR CARRYING OUT INVENTION

Hereinafter, embodiments of the present disclosure will be described with reference to the drawings. In the following embodiments, the same or equivalent parts as those described in the preceding embodiments are denoted by the same reference numerals, and the description thereof may be omitted. When only a part of components is described in the embodiment, components described in the preceding embodiments can be applied to other parts of the components. In the following embodiments, the embodiments can be partially combined with each other as long as the embodiments do not cause any trouble in combination, even if the combination is not specified in particular.

(First Embodiment)

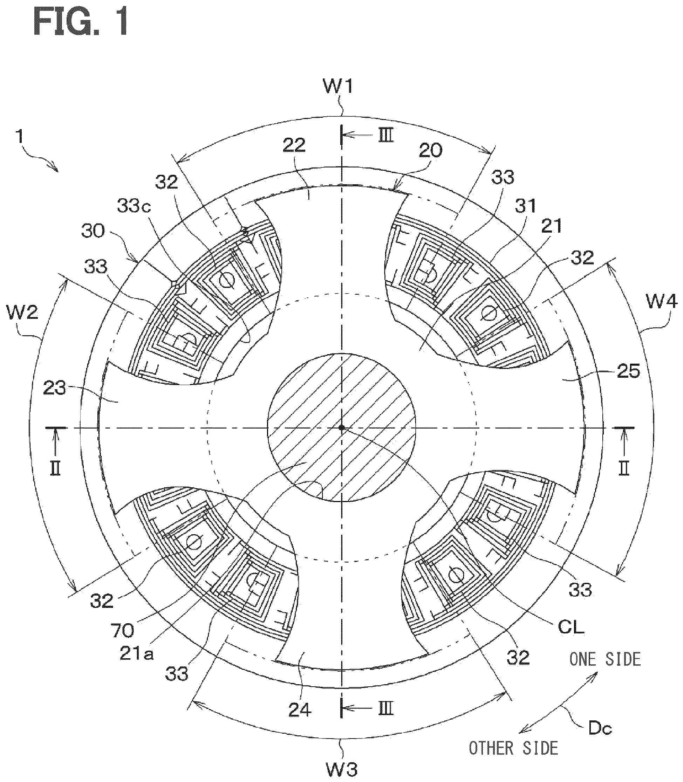

The present embodiment will be described with reference to FIGS. 1 to 12. In the present embodiment, an example in which a position detection device 1 is used to detect a rotation position of a brake pedal or an accelerator pedal of a vehicle pedal device will be described. In the following description, the brake pedal or the accelerator pedal may be simply referred to as a pedal.

As shown in FIGS. 1 to 3, the position detection device 1 according to the present embodiment includes a rotation member 20 and a substrate 30. A rotation shaft center CL displayed in FIGS. 1 to 3 is a rotation center of a rotation shaft 70 and the rotation member 20 of the pedal. In the present embodiment, a direction in which the rotation shaft center CL extends is defined as an axial direction Da, a direction radially extending about an axis of the rotation shaft center CL is defined as a radial direction Dr, and a rotation direction of the rotation shaft center CL is defined as a circumferential direction Dc. The axial direction Da, the radial direction Dr, and the circumferential direction Dc are directions intersecting one another, strictly speaking, directions perpendicular to one another.

The rotation member 20 is made of metal and is formed in a flat plate shape having a thickness in the axial direction Da. The rotation member 20 is coupled to the rotation shaft 70 of the pedal to be non-rotatable relative to the rotation shaft 70. For example, the rotation member 20 may be non-rotatable relative to the rotation shaft 70 via a locking key member, or may be non-rotatable relative to the rotation shaft 70 by being welded to the rotation shaft 70.

The rotation member 20 is a rotation body supported by a non-rotation member via the rotation shaft 70 to be rotatable about the predetermined rotation shaft center CL, and rotates integrally with the pedal and the rotation shaft 70. Accordingly, the position detection device 1 is capable of detecting the rotation position of the pedal by detecting a rotation position of the rotation member 20. That is, a rotation position of the rotation shaft 70 is also the rotation position of the pedal, and is also the rotation position of the rotation member 20 as the detection body. The position detection device 1 according to the present embodiment detects the rotation position of the pedal by detecting the rotation position of the rotation member 20.

The rotation member 20 is coupled to the rotation shaft 70 of the pedal, and thus the rotation member 20 reciprocates according to a stepping-on operation of the pedal within a predetermined angle range about the rotation shaft center CL, but does not complete one complete rotation about the rotation shaft center CL. For example, the rotation member 20 according to the present embodiment reciprocates within an angle range of 0° to 24°, which is a range smaller than 0° to 360° about the rotation shaft center CL, by the stepping-on operation of the pedal. In FIG. 1, a part of an outer shape of four targets 22, 23, 24, and 25 of the rotation member 20 at end positions in the reciprocating movement is shown by a two-dot chain line.

As shown in FIG. 1, the rotation member 20 includes a coupling portion 21 and the four targets 22, 23, 24, and 25. That is, the four targets 22, 23, 24, and 25 provided in the rotation member 20 rotate integrally about the rotation shaft center CL. According to the stepping-on operation of the pedal, the four targets 22, 23, 24, and 25 all reciprocate in the circumferential direction Dc.

For example, the rotation member 20 is formed as a single component including the coupling portion 21 and the four targets 22, 23, 24, and 25. The rotation member 20 is formed in a flat plate shape having a uniform thickness in the axial direction Da. Therefore, the thicknesses of the four targets 22 to 25 in the axial direction Da are the same. In the description of the present embodiment, the four targets 22, 23, 24, and 25 may be collectively referred to as four targets 22 to 25. The four targets 22 to 25 may be referred to as a first target 22, a second target 23, a third target 24, and a fourth target 25, respectively.

The coupling portion 21 is disposed in a center portion of the rotation member 20 and has an annular shape centered on the rotation shaft center CL. A fitting hole 21a penetrating the coupling portion 21 in the axial direction Da is provided on an inner side of the coupling portion 21. The rotation shaft 70 is fitted into the fitting hole 21a to be non-rotatable relative to the coupling portion 21. That is, the rotation member 20 is coupled to the rotation shaft 70 at the coupling portion 21.

The four targets 22 to 25 are each provided to protrude outward in the radial direction Dr from the coupling portion 21. The four targets 22 to 25 are arranged at equal pitches in the circumferential direction Dc. Specifically, the first target 22, the second target 23, the third target 24, and the fourth target 25 are arranged in this order at pitch intervals of 90 degrees in the circumferential direction Dc. The interval in the circumferential direction Dc of the four targets 22 to 25 is set to be able to cover one of a first positive spiral portion 32a and a first reverse spiral portion 32b, which will be described later, of a first reception coil 32. The interval in the circumferential direction Dc of the four targets 22 to 25 is set to be able to cover one of a second positive spiral portion 33a and a second reverse spiral portion 33b, which will be described later, of a second reception coil 33 simultaneously with one of the first positive spiral portion 32a and the first reverse spiral portion 32b.

The first target 22 is disposed on a side opposite to the third target 24 with the rotation shaft center CL sandwiched therebetween. The second target 23 is disposed on a side opposite to the fourth target 25 with the rotation shaft center CL sandwiched therebetween. When viewed in a direction along the axial direction Da, the four targets 22 to 25 are disposed to be point symmetric about the rotation shaft center CL as a whole.

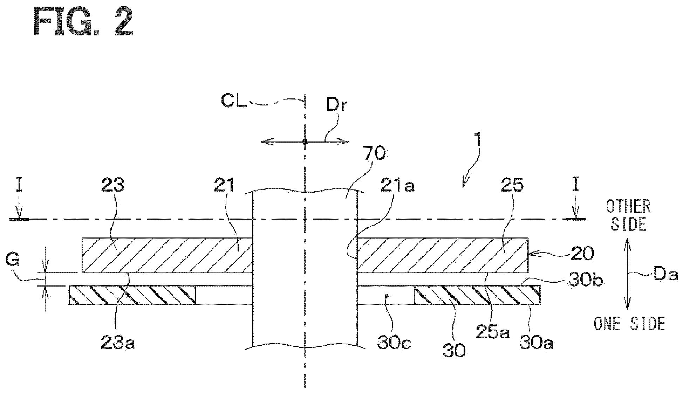

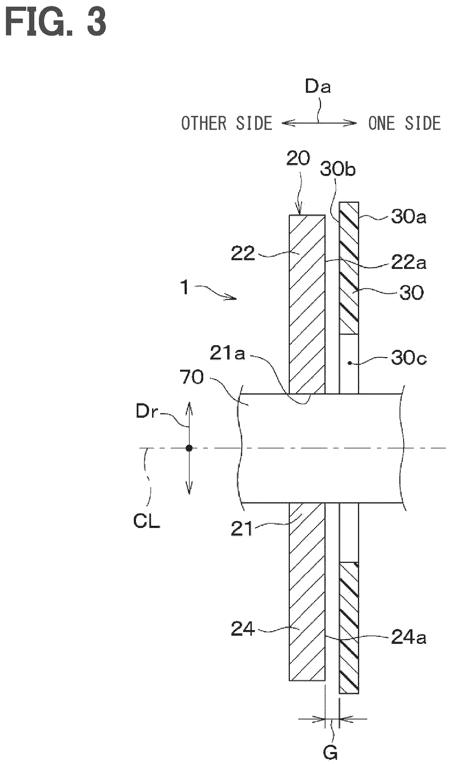

As shown in FIG. 3, the first target 22 is provided on one side in the axial direction Da and has a first facing surface 22a facing the substrate 30. As shown in FIG. 2, the second target 23 is provided on one side in the axial direction Da and has a second facing surface 23a facing the substrate 30. The third target 24 is provided on one side in the axial direction Da and has a third facing surface 24a facing the substrate 30. The fourth target 25 is provided on one side in the axial direction Da and has a fourth facing surface 25a facing the substrate 30. The first facing surface 22a, the second facing surface 23a, the third facing surface 24a, and the fourth facing surface 25a are provided parallel to the other surface 30b, which will be described later, of the substrate 30.

As shown in FIG. 1, a size of the first target 22 in the circumferential direction Dc decreases toward the outside in the radial direction Dr from an innermost portion in the radial direction Dr to a substantially center portion in the radial direction Dr. The size of the first target 22 in the circumferential direction Dc increases toward the outside in the radial direction Dr from the substantially center portion in the radial direction Dr to an outermost portion in the radial direction Dr. Accordingly, an end portion on the one side and an end portion on the other side in the circumferential direction Dc of the first target 22 extend in a curved shape when viewed in the direction along the axial direction Da.

The second target 23, the third target 24, and the fourth target 25 have the same shape as the first target 22. In the present embodiment, all of the four targets 22 to 25 have the same shape.

Accordingly, an end portion on the one side and an end portion on the other side in the circumferential direction Dc of the second target 23 extend in a curved shape when viewed in the direction along the axial direction Da. An end portion on the one side and an end portion on the other side in the circumferential direction Dc of the third target 24 extend in a curved shape when viewed in the direction along the axial direction Da. An end portion on the one side and an end portion on the other side in the circumferential direction Dc of the fourth target 25 extend in a curved shape when viewed in the direction along the axial direction Da.

In the present embodiment, all of the four targets 22 to 25 have the same shape and rotate integrally as described above. Therefore, operation ranges of the four targets 22 to 25 have the same length in the circumferential direction Dc. The operation range of the first target 22 is defined as a first operation range W1, the operation range of the second target 23 is defined as a second operation range W2, the operation range of the third target 24 is defined as a third operation range W3, and the operation range of the fourth target 25 is defined as a fourth operation range W4.

The first operation range W1 is a maximum range in the circumferential direction Dc on which the first target 22 extends according to the reciprocating movement of the first target 22. Therefore, the first target 22 reciprocates in the circumferential direction Dc within the first operation range W1. The second operation range W2 is a maximum range in the circumferential direction Dc on which the second target 23 extends according to the reciprocating movement of the second target 23. Therefore, the second target 23 reciprocates in the circumferential direction Dc within the second operation range W2. The third operation range W3 is a maximum range in the circumferential direction Dc on which the third target 24 extends according to the reciprocating movement of the third target 24. Therefore, the third target 24 reciprocates in the circumferential direction Dc within the third operation range W3. The fourth operation range W4 is a maximum range in the circumferential direction Dc on which the fourth target 25 extends according to the reciprocating movement of the fourth target 25. Therefore, the fourth target 25 reciprocates in the circumferential direction Dc in the fourth operation range W4.

The substrate 30 is a multilayer printed substrate on which wiring patterns are provided and electrical components (not shown) are mounted. Specifically, the substrate 30 is a multilayer substrate in which an insulating film and a wiring layer are alternately laminated. Although not particularly shown, various electronic components such as resistors are appropriately disposed in the substrate 30.

The substrate 30 has a planar one surface 30a and the other surface 30b that are orthogonal to the axial direction Da. That is, a normal direction of the substrate 30 coincides with the axial direction Da. The one surface 30a of the substrate 30 is provided on one side of the substrate 30 in the axial direction Da. The other surface 30b of the substrate 30 is provided on the other side of the substrate 30 opposite to the one side in the axial direction Da.

The substrate 30 is a non-rotation member that does not rotate relative to the pedal. Accordingly, the rotation member 20 rotates relative to the substrate 30.

The substrate 30 is disposed on the one side in the axial direction Da with respect to the four targets 22 to 25. The other surface 30b of the substrate 30 faces the first facing surface 22a, the second facing surface 23a, the third facing surface 24a, and the fourth facing surface 25a of the four targets 22 to 25 at predetermined intervals in the axial direction Da. In other words, the substrate 30 faces the rotation member 20 in a state of being separated from the rotation member 20 in a facing direction which is a direction facing the rotation member 20. A predetermined interval in the axial direction Da between the substrate 30 and the rotation member 20 is the same as a size between the substrate 30 and the four targets 22 to 25. Hereinafter, the predetermined interval in the axial direction Da between the substrate 30 and the rotation member 20 is also referred to as a gap G.

The substrate 30 is formed in a disc shape centered on the rotation shaft center CL. A through hole 30c penetrating the substrate 30 in the axial direction Da is provided in a center of the substrate 30. The rotation shaft 70 is inserted into the through hole 30c.

As shown in FIGS. 1, 4, and 5, the substrate 30 includes one transmission coil 31, eight first reception coils 32, eight second reception coils 33, and a signal processing circuit 40 described later, which are provided as wiring patterns. The one transmission coil 31 provided in the position detection device 1, the eight first reception coils 32, the eight second reception coils 33, and the signal processing circuit 40 described later are provided in a single substrate 30. The one transmission coil 31, the eight first reception coils 32, and the eight second reception coils 33 are provided in the wiring layer provided in each layer of the multilayer substrate. The transmission coil 31, the eight first reception coils 32, and the eight second reception coils 33 provided in each layer are appropriately coupled via a via 34.

The one transmission coil 31, the eight first reception coils 32, and the eight second reception coils 33 are coupled to the signal processing circuit 40 described later, which is formed by an IC and the like mounted on the substrate 30, via a coupling wiring pattern (not shown). The substrate 30 corresponds to an arrangement unit in which the one transmission coil 31, the eight first reception coils 32, the eight second reception coils 33, and the signal processing circuit 40 are disposed.

The transmission coil 31 is wound multiple times and formed in an annular shape. The transmission coil 31 is provided to surround the eight first reception coils 32 and the eight second reception coils 33 provided in the substrate 30 when viewed in the direction along the axial direction Da. In other words, when viewed in the direction along the axial direction Da, the transmission coil 31 is disposed outside the eight first reception coils 32 and the eight second reception coils 33. The eight first reception coils 32 and the eight second reception coils 33 are alternately arranged in the circumferential direction Dc inside the transmission coil 31.

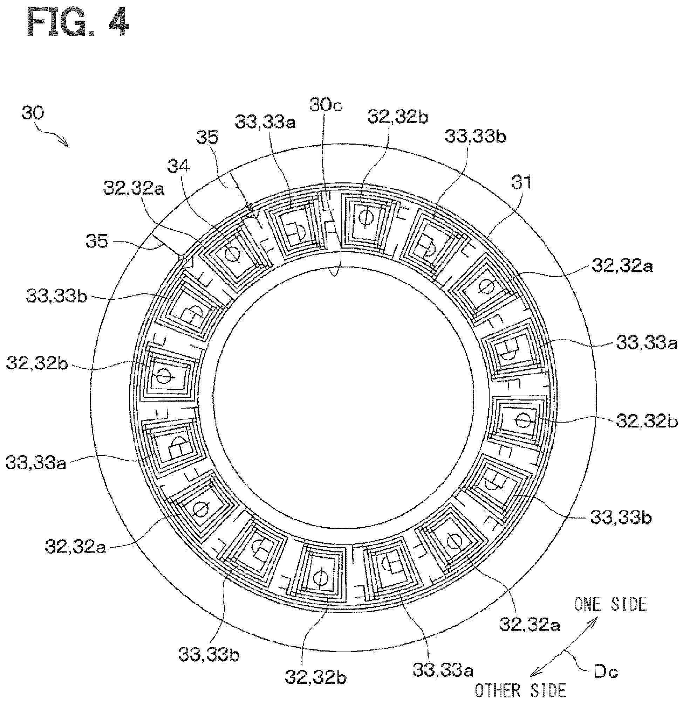

As shown in FIG. 4, the eight first reception coils 32 and the eight second reception coils 33 according to the present embodiment mainly have a spiral shape. Each of the eight first reception coils 32 includes the first positive spiral portion 32a and the first reverse spiral portion 32b. The first positive spiral portion 32a and the first reverse spiral portion 32b are portions forming a spiral shape in each of the eight first reception coils 32. The first positive spiral portion 32a and the first reverse spiral portion 32b of each of the eight first reception coils 32 face one of the four targets 22 to 25 in the axial direction Da. The eight first reception coils 32 are electrically coupled to each other by one stroke writing via the first positive spiral portions 32a and the first reverse spiral portions 32b.

Each of the eight second reception coils 33 according to the present embodiment includes the second positive spiral portion 33a and the second reverse spiral portion 33b. The second positive spiral portion 33a and the second reverse spiral portion 33b are portions forming a spiral shape in each of the eight second reception coils 33. The second positive spiral portion 33a and the second reverse spiral portion 33b of each of the eight second reception coils 33 face one of the four targets 22 to 25 in the axial direction Da. The eight second reception coils 33 are electrically coupled to each other by one stroke writing via the second positive spiral portions 33a and the second reverse spiral portions 33b.

The first positive spiral portion 32a and the first reverse spiral portion 32b of each of the eight first reception coils 32 have the same shape. Therefore, in the following, only the first reception coil 32 facing the target 22 will be described in detail, and the detailed description of the first reception coils 32 facing the remaining three targets 23 to 25 will be omitted.

The second positive spiral portion 33a and the second reverse spiral portion 33b of each of the eight second reception coils 33 have the same shape. Therefore, in the following, only the second reception coil 33 facing the target 22 will be described in detail, and the detailed description of the second reception coils 33 facing the remaining three targets 23 to 25 will be omitted.

The first positive spiral portion 32a and the first reverse spiral portion 32b of the first reception coil 32 and the second positive spiral portion 33a and the second reverse spiral portion 33b of the second reception coil 33 are provided side by side at predetermined intervals along the circumferential direction Dc. Specifically, the first positive spiral portion 32a, the second positive spiral portion 33a, the first reverse spiral portion 32b, and the second reverse spiral portion 33b are provided side by side in this order from one side to the other side of the substrate 30 in the circumferential direction Dc.

The first positive spiral portion 32a and the first reverse spiral portion 32b have a spiral pattern shape formed to draw a square shape while changing a diameter. Coils of the first positive spiral portions 32a and the first reverse spiral portions 32b are respectively wound in the same direction multiple times in the multiple wiring layers of the substrate 30.

The first positive spiral portions 32a and the first reverse spiral portions 32b respectively provided in the multiple wiring layers of the substrate 30 are provided to overlap each other in the normal direction. However, winding directions (that is, spiral directions) of the coils of the first positive spiral portion 32a and the first reverse spiral portion 32b are opposite to each other. For example, the winding direction of the coil of the first positive spiral portion 32a is clockwise when viewed in the normal direction. On the other hand, the winding direction of the coil of the first reverse spiral portion 32b is counterclockwise when viewed in the normal direction.

Similarly to the first positive spiral portion 32a and the first reverse spiral portion 32b, the second positive spiral portion 33a and the second reverse spiral portion 33b have a spiral pattern shape formed to draw a square shape while changing a diameter. Similarly to the first positive spiral portion 32a and the first reverse spiral portion 32b, the coils of the second positive spiral portion 33a and the second reverse spiral portion 33b are respectively wound in the same direction multiple times in the multiple wiring layers of the substrate 30. The second positive spiral portions 33a and the second reverse spiral portions 33b respectively provided in the multiple wiring layers of the substrate 30 are provided to overlap each other in the normal direction. However, spiral directions of the second positive spiral portion 33a and the second reverse spiral portion 33b are opposite to each other. For example, the coil of the second positive spiral portion 33a is wound clockwise. On the other hand, the coil of the second reverse spiral portion 33b is wound counterclockwise.

Among the eight first reception coils 32 and the eight second reception coils 33, the first reception coil 32 and the second reception coil 33 facing the first target 22 are coils for detecting a position of the first target 22 in the circumferential direction Dc.

The first positive spiral portion 32a and the first reverse spiral portion 32b of the first reception coil 32 are disposed such that at least a part of the first positive spiral portion 32a and the first reverse spiral portion 32b overlap the one side of the first target 22 in the axial direction Da at any position within the first operation range W1 of the first target 22. The second positive spiral portion 33a and the second reverse spiral portion 33b of the second reception coil 33 are disposed such that at least a part of the second positive spiral portion 33a and the second reverse spiral portion 33b overlap the one side of the first target 22 in the axial direction Da at any position within the first operation range W1 of the first target 22.

Therefore, among the eight first reception coils 32 and the eight second reception coils 33, the first reception coil 32 and the second reception coil 33 facing the first target 22 output detection signals corresponding to the position of the first target 22. The first reception coil 32 and the second reception coil 33 facing the first target 22 function as a signal output unit that outputs a signal corresponding to the rotation position of the rotation member 20.

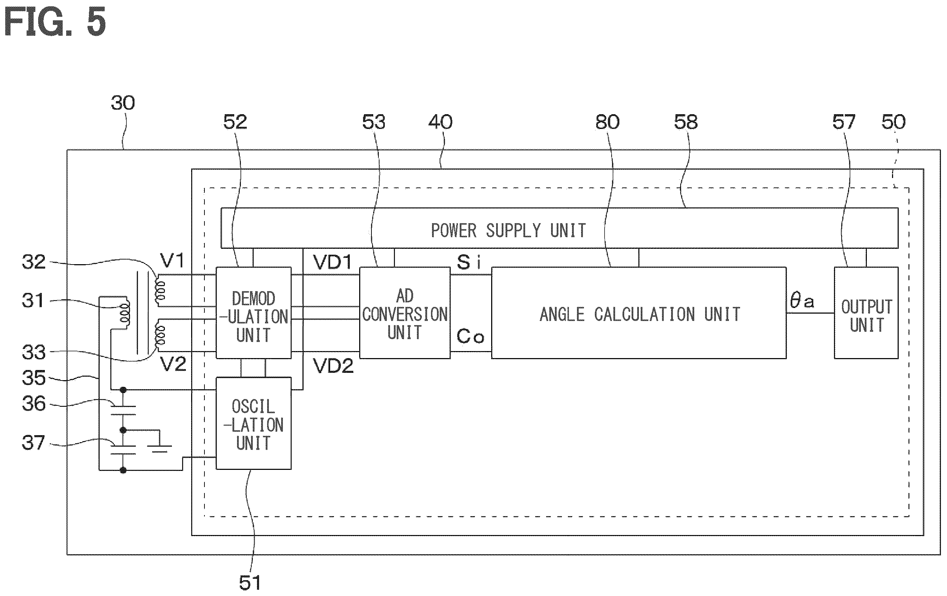

The detection signals output by the first reception coil 32 and the second reception coil 33 are, for example, voltage values. The detection signal output by the first reception coil 32 is a first signal output by the first reception coil 32 as a signal output unit, and corresponds to, for example, a first voltage value V1 shown in FIG. 5 described later. The detection signal output by the second reception coil 33 is a second signal output by the second reception coil 33 functioning as a signal output unit, and corresponds to, for example, a second voltage value V2 shown in FIG. 5 described later.

The first reception coil 32 and the second reception coil 33 facing the second target 23 are coils for detecting a position of the second target 23 in the circumferential direction Dc. Therefore, the first reception coil 32 and the second reception coil 33 facing the second target 23 output detection signals corresponding to the position of the second target 23.

The first reception coil 32 and the second reception coil 33 facing the third target 24 are coils for detecting a position of the third target 24 in the circumferential direction Dc. Therefore, the first reception coil 32 and the second reception coil 33 facing the third target 24 output detection signals corresponding to the position of the third target 24.

The first reception coil 32 and the second reception coil 33 facing the fourth target 25 are coils for detecting a position of the fourth target 25 in the circumferential direction Dc. Therefore, the first reception coil 32 and the second reception coil 33 facing the fourth target 25 output detection signals corresponding to the position of the fourth target 25. Therefore, the first reception coil 32 and the second reception coil 33 facing the second target 23, the third target 24, and the fourth target 25 respectively function as a signal output unit that outputs a signal corresponding to the rotation position of the rotation member 20.

As shown in FIG. 4, the first positive spiral portions 32a and the first reverse spiral portions 32b of the eight first reception coils 32 and the second positive spiral portions 33a and the second reverse spiral portions 33b of the eight second reception coils 33 are disposed side by side in the circumferential direction Dc to form an annular shape centered on the rotation shaft center CL. Specifically, the first positive spiral portions 32a and the first reverse spiral portions 32b of the eight first reception coils 32 and the second positive spiral portions 33a and the second reverse spiral portions 33b of the eight second reception coils 33 are disposed side by side at a pitch of 20 degrees in the circumferential direction Dc about the rotation shaft center CL.

As described above, the first target 22 reciprocates in the circumferential direction Dc within the first operation range W1. The first target 22 is formed not to overlap the first reception coils 32 and the second reception coils 33 facing the second target 23, the third target 24, and the fourth target 25 in the axial direction Da.

The second target 23 reciprocates in the circumferential direction Dc within the second operation range W2. The second target 23 is formed not to overlap with the first reception coils 32 and the second reception coils 33 facing the first target 22, the third target 24, and the fourth target 25 in the axial direction Da.

The third target 24 reciprocates in the circumferential direction Dc in the third operation range W3. The third target 24 is formed not to overlap the first reception coils 32 and the second reception coils 33 facing the first target 22, the second target 23, and the fourth target 25 in the axial direction Da.

The fourth target 25 reciprocates in the circumferential direction Dc in the fourth operation range W4. The fourth target 25 is formed not to overlap the first reception coils 32 and the second reception coils 33 facing the first target 22, the second target 23, and the third target 24 in the axial direction Da.

As shown in FIG. 5, various electric components are mounted on the substrate 30 in addition to the one transmission coil 31, the eight first reception coils 32, the eight second reception coils 33, and the signal processing circuit 40. For example, a coupling wiring 35 for coupling the one transmission coil 31, the eight first reception coils 32, and the eight second reception coils 33 to the signal processing circuit 40 are provided in the substrate 30. The signal processing circuit 40 is coupled to the one transmission coil 31, the eight first reception coils 32, and the eight second reception coils 33 via the coupling wiring 35.

The signal processing circuit 40 includes a microcomputer equipped with a CPU and storage units such as an ROM, an RAM, and a non-volatile RAM, and is coupled to the transmission coil 31, the first reception coil 32, and the second reception coil 33. The signal processing circuit 40 implements various control operations by the CPU reading and executing programs from the ROM or the non-volatile RAM. The ROM or the non-volatile RAM stores in advance various types of data (for example, initial values, look-up tables, and maps) used when the programs are executed. The storage medium such as the ROM is a non-transitory tangible storage medium. The CPU is an abbreviation for Central Processing Unit, the ROM is an abbreviation for Read Only Memory, and the RAM is an abbreviation for Random Access Memory.

Specifically, as shown in FIG. 5, the signal processing circuit 40 includes a signal processing unit 50 that is coupled to the one transmission coil 31, the eight first reception coils 32, and the eight second reception coils 33 and performs predetermined processing. The signal processing unit 50 includes an oscillation unit 51, a demodulation unit 52, an AD conversion unit 53, an angle calculation unit 80, an output unit 57, and a power supply unit 58. In the following, a typical example of converting a signal into a digital signal will be described. However, in the case of processing with an analog signal, the signal processing unit 50 may not include the AD conversion unit 53 and the like.

In the present embodiment, the eight first reception coils 32 and the eight second reception coils 33 output voltage values corresponding to the positions of the four targets 22 to 25. When the voltage values are output from the eight first reception coils 32 and the eight second reception coils 33 to the signal processing unit 50, control processing executed by the signal processing unit 50 is the same.

Therefore, in FIG. 5, among the eight first reception coils 32 and the eight second reception coils 33, only the first reception coil 32 and the second reception coil 33 facing the first target 22 are shown. In the following, the first voltage value V1 and the second voltage value V2 when the first reception coil 32 and the second reception coil 33 facing the first target 22 output voltage values corresponding to the position of the first target 22 will be described. The first voltage value V1 is a voltage value output by the first reception coil 32 according to the position of the first target 22. The second voltage value V2 is a voltage value output by the second reception coil 33 according to the position of the first target 22.

First, an alternating current having a predetermined frequency is applied from the oscillation unit 51 to the transmission coil 31. Accordingly, electromagnetic induction is generated in the transmission coil 31. The transmission coil 31 and the first reception coil 32 are inductively coupled to each other by the generated electromagnetic induction. In addition, the transmission coil 31 and the second reception coil 33 are inductively coupled to each other by the generated electromagnetic induction. Magnetic fields passing through the first reception coil 32 and the second reception coil 33 in the axial direction Da are generated around the first positive spiral portion 32a and the first reverse spiral portion 32b of the first reception coil 32 and around the second positive spiral portion 33a and the second reverse spiral portion 33b of the second reception coil 33. A magnetic field generated by the alternating current changes, and thus the first voltage value V1, which is an induced electromotive force generated in the first reception coil 32, and the second voltage value V2, which is an induced electromotive force generated in the second reception coil 33, are changed by the electromagnetic induction.

When the first target 22 faces the first reception coil 32 and the second reception coil 33, an eddy current, which is an induced current, is generated in the first target 22 by the electromagnetic induction, and a magnetic field is generated due to the eddy current. Therefore, of the magnetic fields in the axial direction Da passing through the first reception coil 32 and the second reception coil 33, a magnetic field passing through a portion facing the first target 22 is offset by the magnetic field caused by the eddy current. Accordingly, the first voltage value V1 generated in the first reception coil 32 and the second voltage value V2 generated in the second reception coil 33 change.

As the rotation member 20 rotates, an area of the first reception coil 32 and the second reception coil 33 facing the first target 22 changes. Of the magnetic fields in the axial direction Da passing through the first reception coil 32 and the second reception coil 33, a magnitude of the magnetic field passing through the portion facing the first target 22 changes periodically. Thus, the rotation member 20 according to the present embodiment changes the first voltage value V1 generated in the first reception coil 32 and the second voltage value V2 generated in the second reception coil 33 according to the rotation position of the rotation member 20.

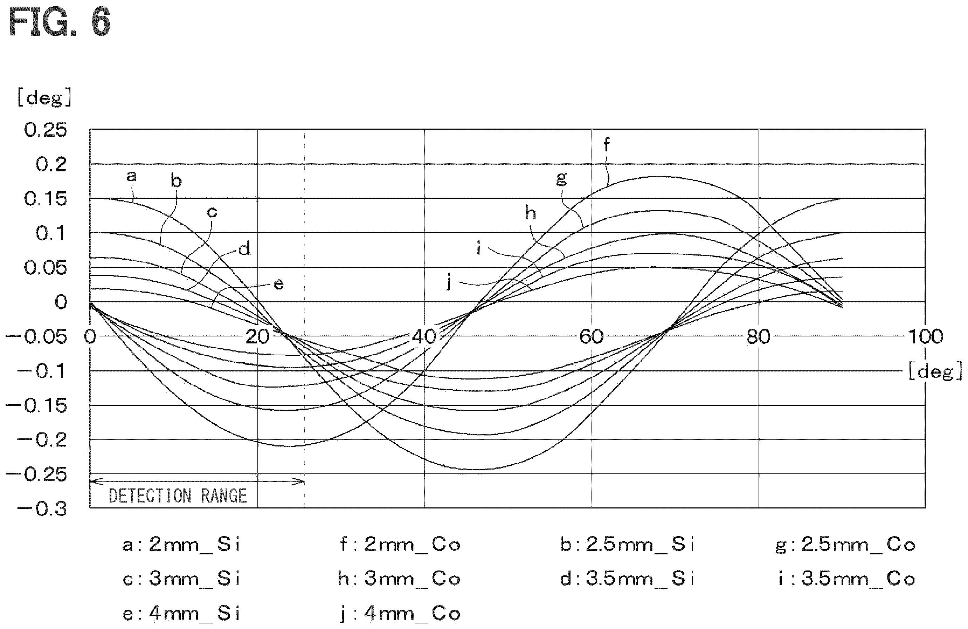

Therefore, as shown in FIG. 6, as the rotation position of the rotation member 20 is changed, the first voltage value V1 generated in the first reception coil 32 and the second voltage value V2 generated in the second reception coil 33 periodically change.

For example, when the portion of the first target 22 facing the first reverse spiral portion 32b is larger than the first positive spiral portion 32a in the first reception coil 32, the first voltage value V1 is a voltage value on a plus side of a center of an amplitude in the first voltage value V1 having a sine wave shape. In addition, for example, when a portion of the first target 22 facing the first positive spiral portion 32a is larger than the first reverse spiral portion 32b in the first reception coil 32, a voltage value on a minus side of the center of the amplitude in the first voltage value V1 having the sine wave shape is output.

For example, when a portion of the first target 22 facing the second reverse spiral portion 33b is larger than the second positive spiral portion 33a in the second reception coil 33, the second voltage value V2 is a voltage value on a plus side of a center of an amplitude in the second voltage value V2 having a cosine wave shape. In addition, for example, when a portion of the first target 22 facing the second positive spiral portion 33a is larger than the second reverse spiral portion 33b in the second reception coil 33, a voltage value on a minus side of the center of the amplitude in the second voltage value V2 having the cosine wave shape is output.

The first reception coil 32 and the second reception coil 33 are provided such that a waveform of the first voltage value V1 and a waveform of the second voltage value V2 are different by 90° in electric angle. Therefore, in the present embodiment, the first voltage value V1 generated in the first reception coil 32 has the sine wave shape corresponding to the rotation position of the first target 22. The second voltage value V2 generated in the second reception coil 33 has a wave shape whose phase is different from that of the first voltage value V1, and has the cosine wave shape corresponding to the rotation position of the first target 22.

In the substrate 30 according to the present embodiment, the eight first reception coils 32 and the eight second reception coils 33 are arranged in the circumferential direction Dc to form an annular shape centered on the rotation shaft center CL. When the rotation member 20 is temporarily rotatable by 360°, the four targets 22 to 25 pass in front of the eight first reception coils 32 and the eight second reception coils 33 during one rotation of the rotation member 20.

In the position detection device 1 having such a configuration, the first reception coil 32 and the second reception coil 33 of the substrate 30 have a four-pole configuration. In the first reception coil 32 and the second reception coil 33 having the four-pole configuration, the voltage values output by the eight first reception coils 32 and the eight second reception coils 33 change four times in positive and negative during one rotation of the rotation member 20. That is, during one rotation of the rotation member 20 in a range of 0° to 360° of a mechanical angle, which is a rotation angle of the rotation member 20, an electric angle of the first reception coil 32 and the second reception coil 33 is four rotations in the range of 0° to 360°. In other words, one rotation of the electric angle, that is, a rotation range from 0° to 360° corresponds to a rotation range of 0° to 90° of the mechanical angle.

Next, an operation of the signal processing unit 50 will be described. The signal processing unit 50 is a calculation unit that calculates the rotation position of the rotation member 20 based on the first voltage value V1 output by the first reception coil 32 and the second voltage value V2 output from the second reception coil 33. That is, the signal processing unit 50 is a calculation unit that calculates a detection body position as the position of the rotation member 20 which is a detection body.

As shown in FIG. 5, the oscillation unit 51 is coupled to both ends of the transmission coil 31, and applies an alternating current having a predetermined frequency. Two capacitors 36 and 37 are coupled in series between the both ends of the transmission coil 31 and the oscillation unit 51, and a part coupling the two capacitors 36 and 37 to each other is coupled to ground. The transmission coil 31 generates a magnetic field in the axial direction Da passing through the first reception coil 32 and the second reception coil 33. However, a method for connecting the transmission coil 31 and the oscillation unit 51 can be appropriately changed. For example, one capacitor may be disposed between the both ends of the transmission coil 31 and the oscillation unit 51.

The demodulation unit 52 is coupled to both ends of the first reception coil 32 and both ends of the second reception coil 33. The demodulation unit 52 generates a first demodulation signal VD1 in which the first voltage value V1 of the first reception coil 32 is demodulated, and generates a second demodulation signal VD2 in which the second voltage value V2 of the second reception coil 33 is demodulated.

The AD conversion unit 53 is coupled to the demodulation unit 52 and the angle calculation unit 80. The AD conversion unit 53 outputs, to the angle calculation unit 80, a first conversion signal Si obtained by performing AD conversion on the first demodulation signal VD1 and a second conversion signal Co obtained by performing AD conversion on the second demodulation signal VD2.

In the magnetic fields in the axial direction Da passing through the first reception coil 32 and the second reception coil 33, magnetic fluxes change based on a size of the gap G between the rotation member 20 and the substrate 30. Therefore, the first voltage value V1 generated in the first reception coil 32 due to the magnetic field passing through the first reception coil 32 in the axial direction Da changes based on the gap G between the rotation member 20 and the substrate 30. The second voltage value V2 generated in the second reception coil 33 due to the magnetic field passing through the second reception coil 33 in the axial direction Da changes based on the gap G between the rotation member 20 and the substrate 30.

Accordingly, in the first conversion signal Si based on the first voltage value V1 of the first reception coil 32 and the second conversion signal Co based on the second voltage value V2 of the second reception coil 33, amplitudes change according to the gap G, as shown in FIG. 6. Specifically, in the first conversion signal Si based on the first voltage value V1 and the second conversion signal Co based on the second voltage value V2, the amplitudes decrease as the gap G increases, and the amplitudes increase as the gap G decreases.

FIG. 6 shows an example in which the amplitudes of the first conversion signal Si and the second conversion signal Co change according to the gap G when the rotation range of the rotation member 20 is a mechanical angle of 0° to 90° and a range of the electric angle of the first reception coil 32 and the second reception coil 33 is 0° to 360°. Specifically, a solid line a indicates the first conversion signal Si when the gap G is set to 2 mm. A solid line b indicates the first conversion signal Si when the gap G is set to 2.5 mm. A solid line c indicates the first conversion signal Si when the gap G is set to 3 mm. A solid line d indicates the first conversion signal Si when the gap G is set to 3.5 mm. A solid line e indicates the first conversion signal Si when the gap G is set to 4 mm.

A solid line f in FIG. 6 indicates the second conversion signal Co when the gap G is set to 2 mm. A solid line g indicates the second conversion signal Co when the gap G is set to 2.5 mm. A solid line h indicates the second conversion signal Co when the gap G is set to 3 mm. A solid line i indicates the second conversion signal Co when the gap G is set to 3.5 mm. A solid line j indicates the second conversion signal Co when the gap G is set to 4 mm.

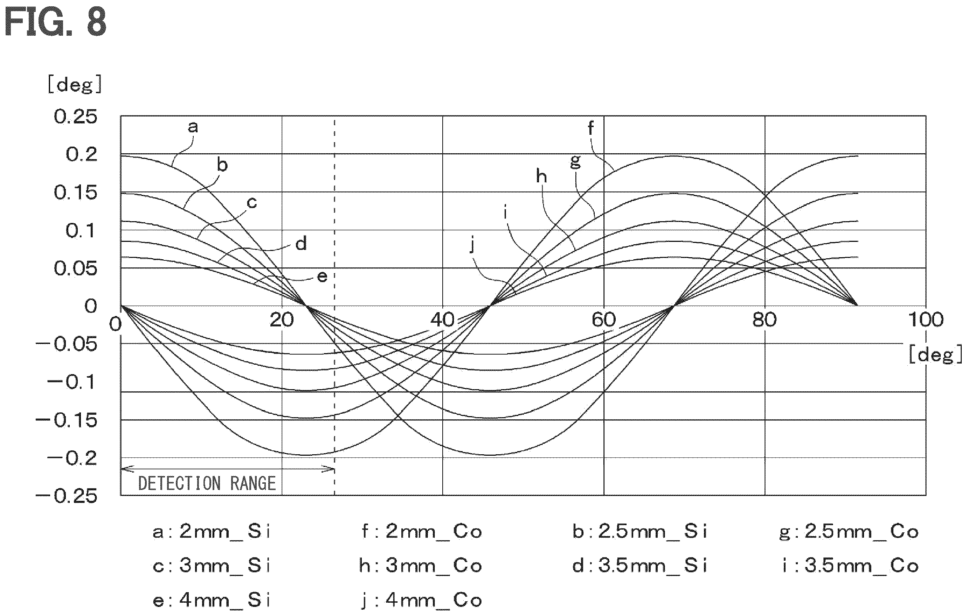

The solid line a, the solid line b, the solid line c, the solid line d, the solid line e, the solid line f, the solid line g, the solid line h, the solid line i, and the solid line j are the same in FIG. 8 described later.

Thus, in the first conversion signal Si based on the first voltage value V1 and the second conversion signal Co based on the second voltage value V2, the amplitudes change according to the gap G. As will be specifically described later, when a position calculation unit 55 calculates a rotation angle $\theta$, the position calculation unit 55 calculates the rotation angle $\theta$ based on the first conversion signal Si based on the first voltage value V1 and the second conversion signal Co based on the second voltage value V2. Therefore, when the rotation member 20 and the substrate 30 are assembled to the rotation shaft 70, the gap G is preferably set to a preset design value. Accordingly, when an angle is calculated by the position calculation unit 55, the rotation angle $\theta$ can be calculated in consideration of a magnitude of the amplitude corresponding to the gap G.

However, the gap G between the rotation member 20 and the substrate 30 may deviate from the design value due to assembly errors and manufacturing errors when the rotation member 20 and the substrate 30 are assembled to the rotation shaft 70. For example, even when the design value of the gap G is 3 mm, an actual gap G may deviate from 3 mm to 2 mm or 4 mm due to the assembly errors and the manufacturing errors when the rotation member 20 and the substrate 30 are assembled to the rotation shaft 70. When the amplitudes of the first conversion signal Si and the second conversion signal Co are changed due to the deviation of the gap G from the design value, an error is generated in a calculation result when the position calculation unit 55 calculates the rotation angle $\theta$ based on the first conversion signal Si and the second conversion signal Co.

When the first conversion signal Si based on the first voltage value V1 has a sine wave shape, a gain, an offset, and a phase of the first conversion signal Si having the sine wave shape change according to the gap G. Accordingly, the first conversion signal Si based on the first voltage value V1 may be distorted from an ideal sine wave shape according to the gap G. In this case, a shape indicated by the first conversion signal Si based on the first voltage value V1 is a sine wave shape distorted with respect to the ideal sine wave shape. In other words, the first voltage value V1 has a sine wave shape including distortion.

When the second conversion signal Co based on the second voltage value V2 has a cosine wave shape, a gain, an offset, and a phase of the second conversion signal Co having the cosine wave shape change according to the gap G. Accordingly, the second conversion signal Co based on the second voltage value V2 may be distorted from an ideal sine wave shape according to the gap G. In this case, a shape indicated by the second conversion signal Co based on the second voltage value V2 is a cosine wave shape distorted with respect to the ideal cosine wave shape. In other words, the second voltage value V2 has a cosine wave shape including distortion.

The distortion of the first conversion signal Si from the ideal sine wave shape and the distortion of the second conversion signal Co from the ideal cosine wave shape also cause an error in the calculation result when the position calculation unit 55 calculates the rotation angle $\theta$.

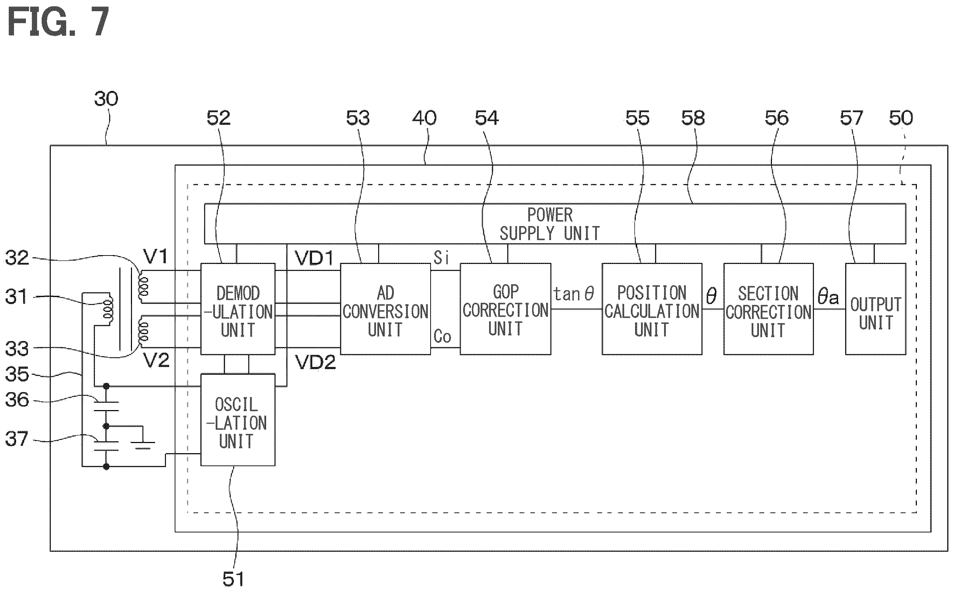

Therefore, the angle calculation unit 80 corrects the first conversion signal Si and the second conversion signal Co by correcting a gain (G), an offset (O), and a phase (P) used for calculating the rotation angle $\theta$ using the first conversion signal Si and the second conversion signal Co. The angle calculation unit 80 derives tan $\theta$, which will be described later, for calculating an angle by calculating an arc tangent function using the corrected first conversion signal Si and the corrected second conversion signal Co, and calculates the position of the rotation member 20 based on the derived tan $\theta$. For example, as shown in FIG. 7, the angle calculation unit 80 according to the present embodiment includes a GOP correction unit 54 that corrects the first conversion signal Si and the second conversion signal Co, the position calculation unit 55 that calculates the rotation angle $\theta$, and a section correction unit 56 that corrects the rotation angle $\theta$ calculated by the position calculation unit 55.

The signal processing unit 50 according to the present embodiment may function as the GOP correction unit 54, the position calculation unit 55, and the section correction unit 56. The signal processing unit 50 may include one circuit module capable of performing the functions of the GOP correction unit 54, the position calculation unit 55, and the section correction unit 56. The signal processing unit 50 may include multiple circuit modules corresponding one-to-one to the GOP correction unit 54, the position calculation unit 55, and the section correction unit 56.

The GOP correction unit 54 corrects the first conversion signal Si and the second conversion signal Co by using one correction term among a gain correction term, an offset correction term, and a phase correction term for each of the first conversion signal Si and the second conversion signal Co. The $\tan \theta$ is derived using the corrected first conversion signal Si and second conversion signal Co and the following Mathematical Formula 1. Thus, the GOP correction unit 54, which corrects the first voltage value V1 converted into the first conversion signal Si and the second voltage value V2 converted into the second conversion signal Co using a first correction term and a second correction term described later, functions as a signal correction unit. In other words, the GOP correction unit 54 corrects the first conversion signal Si based on the first voltage value V1 and the second conversion signal Co based on the second voltage value V2.

(Mathematical Formula 1)

$$\tan \theta = \frac{C\{(A1 \sin \theta + B1) - (A2 \cos \theta + B2)\}}{(A1 \sin \theta + B1) + (A2 \cos \theta + B2)}$$

In Mathematical Formula 1, A1 is a gain correction term for correcting the gain of the first conversion signal Si, and A2 is a gain correction term for correcting the gain of the second conversion signal Co. In Mathematical Formula 1, B1 is an offset correction term for correcting the offset of the first conversion signal Si, and B2 is an offset correction term for correcting the offset of the second conversion signal Co. In Mathematical Formula 1, C is a phase correction term for correcting the phases of the first conversion signal Si and the second conversion signal Co. As shown in Mathematical Formula 1, Mathematical Formula 1 is based on the first conversion signal Si based on the first voltage value V1 having the sine wave shape and the second conversion signal Co based on the second voltage value V2 having the cosine wave shape.

Hereinafter, the gain correction term for correcting the gain of the first conversion signal Si is also referred to as a first gain correction term, and the offset correction term for correcting the offset of the first conversion signal Si is also referred to as a first offset correction term. The gain correction term for correcting the gain of the second conversion signal Co is also referred to as a second gain correction term, and the offset correction term for correcting the offset of the second conversion signal Co is also called a second offset correction term. The phase correction term for correcting the phase of each of the first conversion signal Si and the second conversion signal Co is also simply referred to as a phase correction term.

In the present embodiment, the first gain correction term and the first offset correction term correspond to the first correction term, and the second gain correction term and the second offset correction term correspond to the second correction term. Hereinafter, the first gain correction term and the first offset correction term may be simply referred to as the first correction term, and the second gain correction term and the second offset correction term may be simply referred to as the second correction term.

The first correction term, the second correction term, and the phase correction term can be obtained by, for example, taking the first conversion signal Si and the second conversion signal Co obtained in a state where the rotation member 20 and the substrate 30 are assembled to the rotation shaft 70 in advance, into an external device different from the position detection device 1. The external device may be implemented by a CPU, a storage unit such as a ROM, a RAM, or a non-volatile RAM, or a microcomputer including an input and output interface. In this case, the external device is capable of deriving the first correction term, the second correction term, and the phase correction term based on a control program stored in the ROM and the like and the input first conversion signal Si and second conversion signal Co.

The external device transmits information of the derived first correction term, second correction term, and phase correction term to the GOP correction unit 54 and stores the information in the GOP correction unit 54. Accordingly, when the first conversion signal Si and the second conversion signal Co output from the AD conversion unit 53 are received, the GOP correction unit 54 corrects the first conversion signal Si and the second conversion signal Co using the stored first correction term, second correction term, and phase correction term. Based on Mathematical Formula 1, the GOP correction unit 54 derives the $\tan \theta$ for the position calculation unit 55 calculating the angle.

The GOP correction unit 54 according to the present embodiment corrects the first conversion signal Si and the second conversion signal Co using the first gain correction term, the first offset correction term, the second gain correction term, and the second offset correction term among the first gain correction term, the first offset correction term, the second gain correction term, the second offset correction term, and the phase correction term. Therefore, the GOP correction unit 54 according to the present embodiment does not correct the phases of the first conversion signal Si and the second conversion signal Co. Accordingly, the GOP correction unit 54 according to the present embodiment derives the tan θ using Mathematical Formula 1 in which 1 is substituted into C as the phase correction term.

A method for deriving the first gain correction term, the first offset correction term, the second gain correction term, and the second offset correction term will be described. The first gain correction term and the first offset correction term are derived such that the first conversion signal Si approaches the ideal sine wave shape as shown in FIG. 8. The second gain correction term and the second offset correction term are derived such that the second conversion signal Co approaches the ideal cosine wave shape as shown in FIG. 8. Further, the first gain correction term, the first offset correction term, the second gain correction term, and the second offset correction term are derived such that a difference, between an error when the gap G is the design value and an error when the gap G deviates from the design value, becomes smaller.

The first conversion signal Si has the sine wave shape as shown in FIG. 6, and the second conversion signal Co has the cosine wave shape as shown in FIG. 6. The first conversion signal Si shown in FIG. 6 has the sine wave shape that includes distortion with respect to the ideal sine wave shape and has frequency components (not shown) superimposed thereon. The second conversion signal Co shown in FIG. 6 has the cosine wave shape that includes distortion with respect to the ideal sine wave shape and has frequency components (not shown) superimposed thereon.

In such a case, the first gain correction term and the first offset correction term are derived such that the first conversion signal Si approaches the ideal sine wave shape. The second gain correction term and the second offset correction term are derived such that the second conversion signal Co approaches the ideal cosine wave shape.

The position detection device 1 according to the present embodiment is used to detect the rotation position of the pedal that reciprocates within the predetermined angle range about the rotation shaft center CL. Specifically, the position detection device 1 according to the present embodiment detects the rotation position of the rotation member 20 that reciprocates within the angle range of 0° to 24° about the rotation shaft center CL when the stepping-on operation of the pedal is performed. In this case, a detection range of the rotation member 20 detected by the position detection device 1 is 0° to 24°.

Therefore, in the position detection device 1 that detects the detection range of 0° to 24°, it is not necessary to derive the first gain correction term, the first offset correction term, the second gain correction term, and the second offset correction term to reduce an error of the rotation position outside the detection range. In other words, the position detection device 1 that detects the detection range of 0° to 24° may derive the first gain correction term, the first offset correction term, the second gain correction term, and the second offset correction term such that an error of the rotation position within the detection range becomes small.

Therefore, in the present embodiment, the first gain correction term and the first offset correction term are derived such that the first conversion signal Si approaches the ideal sine wave shape within the angle range of 0° to 24° as the detection range. The second gain correction term and the second offset correction term are derived such that the second conversion signal Co approaches the ideal cosine wave shape within the angle range of 0° to 24° as the detection range.

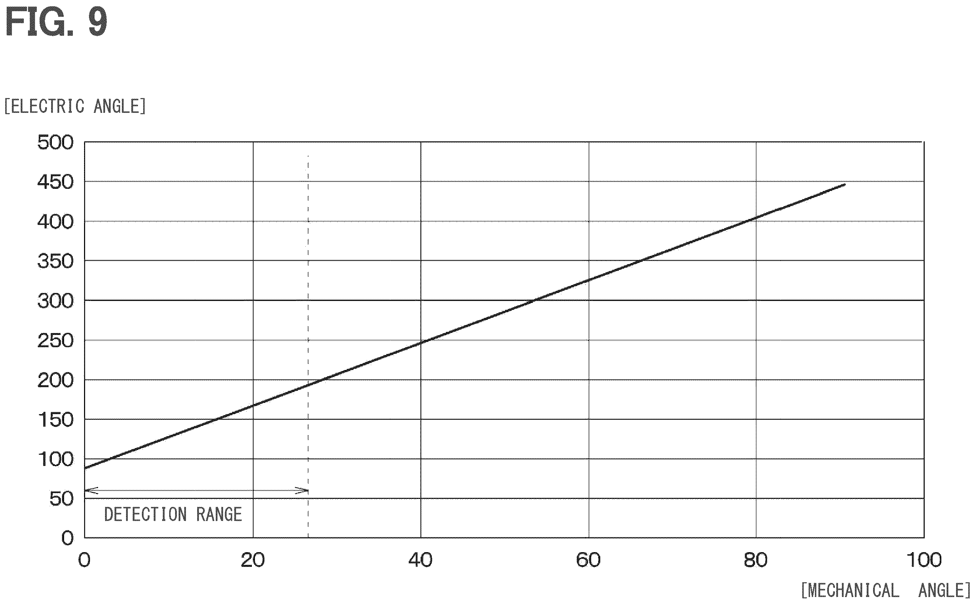

Thus, the first correction term and the second correction term are derived only in the angle range detected by the position detection device 1. The mechanical angle, which is the rotation angle of the rotation member 20, is obtained using the derived first correction term and second correction term. A relationship between the rotation angle of the rotation member 20 and the electric angle of the first reception coil 32 is shown in FIG. 9. Specifically, the rotation angle (that is, the mechanical angle) of the rotation member 20 is proportional to the electric angle of the first reception coil 32. Regardless of the gap G, a relative relationship between the mechanical angle of the rotation member 20 and the electric angle of the first reception coil 32 is substantially the same.

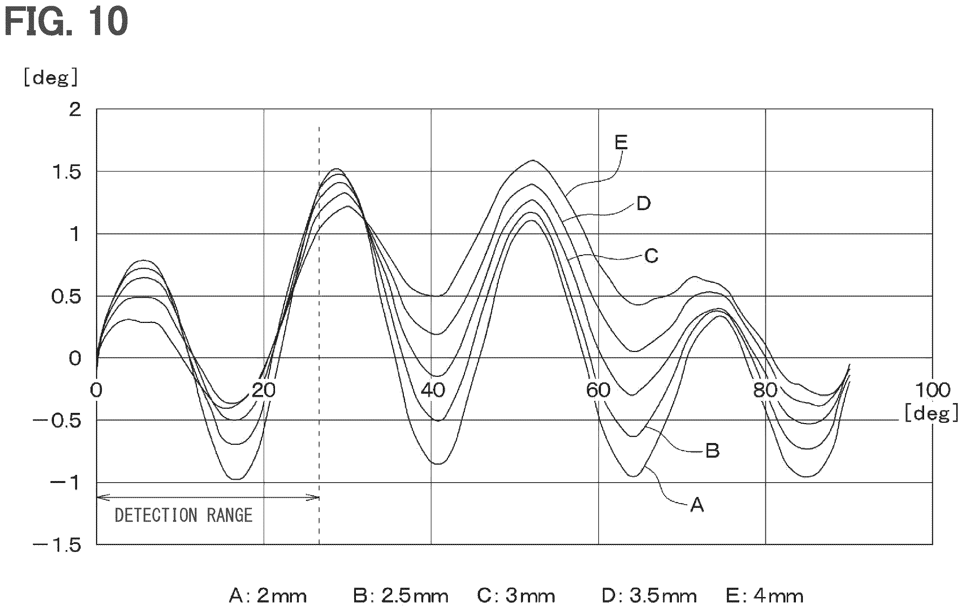

According to this, regardless of the size of the gap G, the error of the rotation angle can be made relatively smaller within the angle range of 0° to 24° than the error within the angle range larger than 24°, as shown in FIG. 10.

A solid line A shown in FIG. 10 indicates an error of the rotation angle when the design value of the actual gap G is set to 2 mm in a case where the design value of the gap G is set to 3 mm when the rotation member 20 and the substrate 30 are assembled to the rotation shaft 70. A solid line B indicates an error of the rotation angle when the actual gap G is set to 2.5 mm in a case where the design value of the gap G is set to 3 mm. A solid line C indicates an error of the rotation angle when the design value of the actual gap G is set to 3 mm in a case where the design value of the gap G is set to 3 mm. A solid line D indicates an error of the rotation angle when the actual gap G is set to 3.5 mm in a case where the design value of the gap G is set to 3 mm. A solid line E indicates an error of the rotation angle when the actual gap G is set to 4 mm in a case where the design value of the gap G is set to 3 mm. For the error of the rotation angle, the amplitude decreases as the gap G increases, and the amplitude increases as the gap G decreases.

However, as shown in FIG. 10, the error when the gap G is deviated from the design value is larger than the error when the gap G is the design value. The design value is the size of the gap G serving as a reference when the rotation member 20 and the substrate 30 are assembled to the rotation shaft 70. Therefore, the error, in a case where the size of the gap G is 2 mm, 2.5 mm, 3.5 mm, and 4 mm which are sizes deviated from the reference gap, is larger than the error in a case where the gap G is 3 mm which is the reference gap. Accordingly, the first correction term and the second correction term are derived such that the difference, between the error when the gap G is the design value and the error when the gap G deviates from the design value, becomes smaller.

In the following, among these gaps G that deviate from the design value, the gaps G of 2 mm and 2.5 mm, which are intervals between the rotation member 20 and the substrate 30 smaller than the reference gap, are defined as near gaps. Among these gaps G that deviate from the design value, the gaps G of 3.5 mm and 4 mm, which are intervals between the rotation member 20 and the substrate 30 larger than the reference gap, are defined as far gaps.

The reference gap is set to 3 mm which is a center between the size of the gap G farthest from the reference gap among 2 mm and 2.5 mm as the near gaps and the gap G farthest from the reference gap among 3.5 mm and 4 mm as the far gaps.

The error when the gap G shown in FIG. 10 is 3 mm is defined as a reference error, and the error when the gap G is 2 mm, 2.5 mm, 3.5 mm, and 4 mm is defined as an out-of-reference error.

The first correction term and the second correction term are derived such that the reference error and the out-of-reference error for each mechanical angle within the angle range of 0° to 24° approach 0. The first correction term and the second correction term according to the present embodiment are derived such that the difference between the reference error and each of the four out-of-reference errors becomes smaller with the reference error as a reference. Specifically, the first gain correction term and the first offset correction term are derived such that an absolute value of a value, which is obtained by subtracting each of the four out-of-reference errors from the reference error for each mechanical angle within the angle range of 0° to 24°, becomes smaller. The second gain correction term and the second offset correction term are derived such that an absolute value of a value, which is obtained by subtracting each of the four out-of-reference errors from the reference error for each mechanical angle within the angle range of 0° to 24°, becomes smaller.

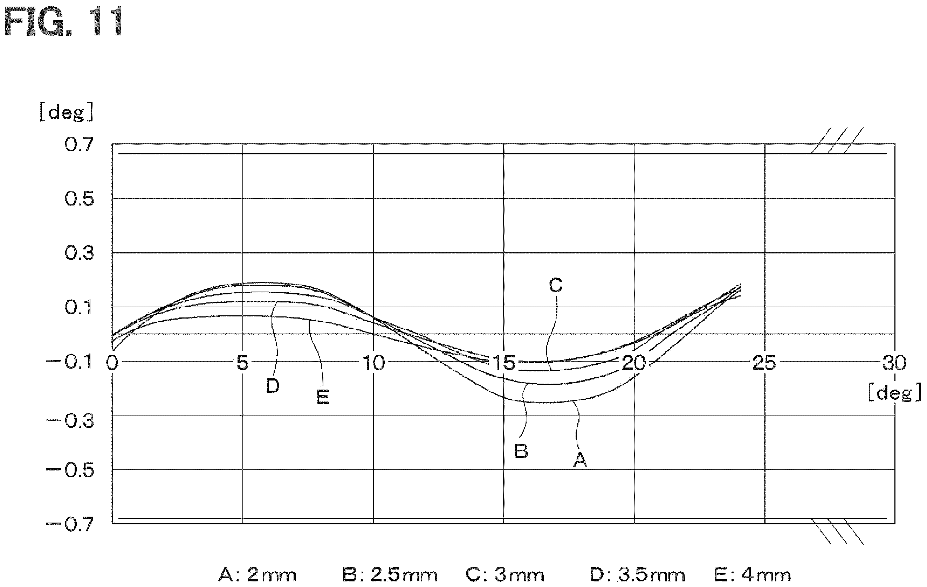

Thus, the first correction term and the second correction term are derived such that the difference between the error when the gap G is the design value and the error when the gap G is deviated from the design value becomes smaller, and the mechanical angle which is the rotation angle of the rotation member 20 is obtained. As shown in FIG. 11, even when the gap G is the design value and even when the gap G is deviated from the design value, the error for each mechanical angle of the rotation angle θ calculated by the position calculation unit 55 can be reduced.

Thus, the reason why the first correction term and the second correction term are derived such that the difference between the error when the gap G is the design value and the error when the gap G is deviated from the design value becomes smaller will be described.

As described above, in the magnetic fields in the axial direction Da passing through the first reception coil 32 and the second reception coil 33, the magnetic fluxes change based on the size of the gap G between the rotation member 20 and the substrate 30. Therefore, the first voltage value V1 generated in the first reception coil 32 and the second voltage value V2 generated in the second reception coil 33 change based on the gap G between the rotation member 20 and the substrate 30. Accordingly, the amplitudes and the offsets of the first conversion signal Si based on the first voltage value V1 and the second conversion signal Co based on the second voltage value V2 change according to the gap G. The change in the amplitude and the change in the offset for the first conversion signal Si and the second conversion signal Co are factors that cause an error in the rotation angle θ calculated by the position calculation unit 55.

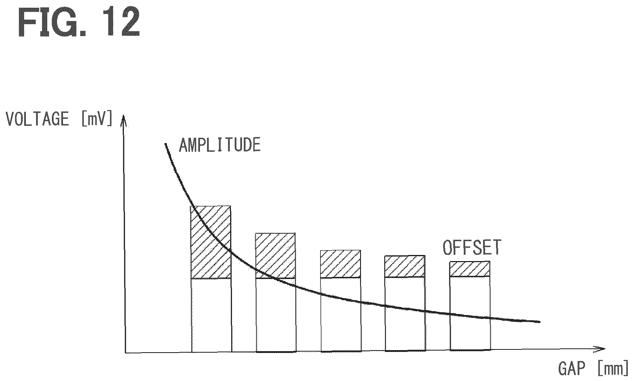

According to intensive studies by inventors, as shown in FIG. 12, it has been found that the offset of each of the first conversion signal Si and the second conversion signal Co changing according to the gap G includes an offset component independent of the change in the amplitude and an offset component that changes according to the change in the amplitude. Specifically, it is found that an amount of change according to the change in the gap G is smaller in the offset component independent of the change in the amplitude than in the offset component that changes according to the change in the amplitude. For example, in an example shown in FIG. 12, the offset component independent of the change in the amplitude hardly changes in magnitude regardless of the size of the gap G, and is substantially constant. The offset component independent of the change in the amplitude is caused by, for example, a fact that a wiring pattern and the like different from the transmission coil 31, the first reception coil 32, and the second reception coil 33 in the substrate 30 has a coil component.

On the other hand, the offset component that changes according to the change in the amplitude increases as the gap G decreases, and decreases as the gap G increases. In other words, the offset component that changes according to the change in the amplitude when the gap G is a near gap is larger than that when the gap G is a far gap. In the present embodiment, the magnitude of the offset component that changes according to the change in the amplitude decreases proportionally as the gap G decreases.

In FIG. 12, the offset component independent of the change in the amplitude is indicated by white, and the offset component that changes according to the change in the amplitude is indicated by hatching. In the following, in the offset of the first conversion signal Si, the offset component independent of the change in the amplitude of the first conversion signal Si is also referred to as a first static offset, and the offset component in which the magnitude of the signal changes according to the change in the amplitude of the first conversion signal Si is also referred to as a first variable offset. In the offset of the second conversion signal Co, the offset component independent of the change in the amplitude of the second conversion signal Co is also referred to as a second static offset, and the offset component in which the magnitude of the signal changes according to the change in the amplitude of the second conversion signal Co is also referred to as a second variable offset.

A magnitude of the first static offset is hardly changed according to the change in the amplitude of the first conversion signal Si, but the first static offset does not necessarily mean that the magnitude is constant. A magnitude of the second static offset is hardly changed according to the change in the amplitude of the second conversion signal Co, but the second static offset does not necessarily mean that the magnitude is constant.

The amplitude of each of the first conversion signal Si and the second conversion signal Co increases as the gap G decreases, and decreases as the gap G increases. Therefore, as the gap G increases, the influence of the change in the offset of each of the first conversion signal Si and the second conversion signal Co increases.

As described above, the first conversion signal Si has the sine wave shape in which the frequency components are superimposed. The second conversion signal Co has the cosine wave shape in which the frequency components are superimposed. According to further intensive studies by the inventors, it is found that the frequency components superimposed on the first conversion signal Si and the second conversion signal Co each include a high-order component in addition to a zeroth-order component and a primary component, and the components included in the frequency component are different according to the gap G. Specifically, it is found that the high-order component superimposed on the first conversion signal Si and the second conversion signal Co has a tendency that the high-order component of the frequency component increases as the gap G decreases and the high-order component of the frequency component decreases as the gap G increases.

For example, in the high-order component superimposed on the first conversion signal Si and the second conversion signal Co, when the gap G is a near gap, the secondary or higher order of the high-order component increases as compared with the case where the gap G is a far gap. In the high-order component superimposed on the first conversion signal Si and the second conversion signal Co, when the gap G is a near gap, the primary or lower order component decreases as compared with the case where the gap G is a far gap, and the component of the zeroth-order component decreases as the size of the gap G decreases.

On the other hand, when the gap G is a far gap, the high-order component superimposed on the first conversion signal Si and the second conversion signal Co includes a large amount of the zeroth-order component as compared with the case where the gap G is a near gap. When the gap G is a far gap, the high-order component superimposed on the first conversion signal Si and the second conversion signal Co includes a large amount of the zeroth-order component compared to another components. The zeroth-order component superimposed on the first conversion signal Si is caused by the first static offset and the first variable offset. The zeroth-order component superimposed on the second conversion signal Co is caused by the second static offset and the second variable offset.

The above is found by the inventors variously changing a setting value of the gap G between the rotation member 20 and the substrate 30, and performing FFT analysis on the first conversion signal Si and the second conversion signal Co in the setting values of the gaps G.

The position calculation unit 55 calculates the rotation angle θ by calculating an arc tangent function using the first conversion signal Si and the second conversion signal Co and performing arc tangent conversion on the first conversion signal Si and the second conversion signal Co. Therefore, the frequency component superimposed on the first conversion signal Si and the second conversion signal Co is a factor causing the error in the calculation result of the rotation angle θ calculated by the position calculation unit 55. The frequency components superimposed on the first conversion signal Si and the second conversion signal Co is subjected to the arc tangent conversion. An order number of each component becomes one larger than that before the arc tangent conversion.

For example, the secondary component superimposed on the first conversion signal Si and the second conversion signal Co becomes a tertiary component by performing the arc tangent conversion. The zeroth-order component superimposed on the first conversion signal Si and the second conversion signal Co becomes a primary component by performing the arc tangent conversion.

Therefore, when the gap G is a near gap, a large amount of the secondary or higher order of the high-order component is included compared to the primary or lower order component, and the rotation angle θ calculated by performing the arc tangent conversion on the first conversion signal Si and the second conversion signal Co includes an error of the tertiary or higher order of the high-order component. However, the first conversion signal Si and the second conversion signal Co when the gap G is a near gap have fewer primary or lower order component as compared with the case where the gap G is a far gap. Therefore, the error of the rotation angle θ when the gap G is a near gap almost does not include the secondary or lower order component as compared with the case where the gap G is a far gap. In this case, in the rotation angle θ calculated by the position calculation unit 55 within the angle range of 0° to 24°, errors of the tertiary or higher order of the high-order component are superimposed within the entire angle range.

On the other hand, when the gap G is a far gap, a large amount of the zeroth-order component is included compared to the other components, and the rotation angle θ calculated by performing the arc tangent conversion on the first conversion signal Si and the second conversion signal Co includes many errors of the primary component. In this case, in the rotation angle θ calculated by the position calculation unit 55 within the angle range of 0° to 24°, errors that increase proportionally as the calculated rotation angle θ increases are superimposed.

Thus, when the frequency component is superimposed on the first conversion signal Si and the second conversion signal Co, the influence of the zeroth-order component on the calculation result of the rotation angle θ becomes larger than that of the high-order component of the frequency component. The zeroth-order component superimposed on the first conversion signal Si is caused by the first static offset and the first variable offset. The zeroth-order component superimposed on the second conversion signal Co is caused by the second static offset and the second variable offset. Therefore, as the gap G increases, the influence of the offset components of the first conversion signal Si and the second conversion signal Co increases.

In the present embodiment, the GOP correction unit 54 derives the first correction term and the second correction term such that a difference, between an error when the gap G is a design value and an error when the gap G is a far gap, is reduced. Specifically, the GOP correction unit 54 derives the first offset correction term and the second offset correction term, such that the primary component obtained by the position calculation unit 55 performing the arc tangent conversion on the first conversion signal Si and the second conversion signal Co, when the gap G is the far gap, approaches the primary component obtained by the position calculation unit 55 performing the arc tangent conversion on the first conversion signal Si and the second conversion signal Co when the gap G is the near gap.

By adjusting the first static offset, the GOP correction unit 54 derives the first offset correction term such that a relationship, between an amount of change in the amplitude of the first conversion signal Si and an amount of change in the offset of the first conversion signal Si based on the amount of change in the amplitude of the first conversion signal Si, becomes a proportional relationship. In other words, the first offset correction term is derived such that the offset of the first conversion signal Si after adjusting the first static offset linearly decreases in proportion to the decrease in the amplitude of the first conversion signal Si.

For example, as in the present embodiment, when the first variable offset linearly decreases in proportion to the decrease in the amplitude of the first conversion signal Si, the GOP correction unit 54 may derive the first offset correction term that can remove the first static offset in the offset. Accordingly, the relationship, between the amount of change in the amplitude of the first conversion signal Si and the amount of change in the offset of the first conversion signal Si based on the amount of change in the amplitude of the first conversion signal Si, can be a proportional relationship in which a proportionality constant is a negative value. Accordingly, an offset that changes in proportion to the amount of change in the amplitude of the first conversion signal Si remains in the first conversion signal Si whose offset is adjusted by the GOP correction unit 54.

By adjusting the second static offset, the GOP correction unit 54 derives the second offset correction term such that a relationship, between an amount of change in the amplitude of the second conversion signal Co and an amount of change in the offset of the second conversion signal Co based on the amount of change in the amplitude of the second conversion signal Co, becomes a proportional relationship. In other words, the second offset correction term is derived such that the offset of the second conversion signal Co after adjusting the second static offset linearly decreases in proportion to the decrease in the amplitude of the second conversion signal Co.

For example, as in the present embodiment, when the second variable offset linearly decreases in proportion to the decrease in the amplitude of the second conversion signal Co, the GOP correction unit 54 may derive the second offset correction term that can remove the second static offset in the offset. Accordingly, the relationship, between the amount of change in the amplitude of the second conversion signal Co and the amount of change in the offset of the second conversion signal Co based on the amount of change in the amplitude of the second conversion signal Co, can be a proportional relationship in which a proportionality constant is a negative value. Accordingly, an offset that changes in proportion to the amount of change in the amplitude of the second conversion signal Co remains in the second conversion signal Co whose offset is adjusted by the GOP correction unit 54.

Thus, the offset remaining in the first conversion signal Si that changes in proportion to the amount of change in the amplitude of the first conversion signal Si is a factor causing generation of the zeroth-order component in the frequency component superimposed on the first conversion signal Si. The offset remaining in the second conversion signal Co that changes in proportion to the amount of change in the amplitude of the second conversion signal Co is a factor causing generation of the zeroth-order component in the frequency component superimposed on the second conversion signal Co. The offset remaining in each of the first conversion signal Si and the second conversion signal Co after the offset is adjusted is a primary component obtained by performing the arc tangent conversion using the first conversion signal Si and the second conversion signal Co.

The primary component, which remains in the rotation angle θ obtained by performing the arc tangent conversion using the first conversion signal Si and the second conversion signal Co after the offset is adjusted, can be removed by processing executed by the section correction unit 56 described later.

By deriving the first correction term and the second correction term as described above, a difference between an error when the gap G is a design value and an error when the gap G is a near gap can be reduced. The influence of the offset component independent of the change in the amplitude can be reduced.

A method for deriving the first correction term and the second correction term, such that the reference error and the out-of-reference error approach 0, is not limited to the above.

For example, the method for deriving the first correction term and the second correction term may be derived such that a sum of an absolute value of the reference error and an absolute value of the out-of-reference error for each mechanical angle is a minimum value. The method for deriving the first correction term and the second correction term may be derived using a least squares method. According to the derivation method according to the least squares method, even when noise is superimposed on the first voltage value V1 and the second voltage value V2, the first correction term and the second correction term that can reduce the influence of the noise can be derived.

Thus, by using the first correction term and the second correction term derived as described above, the GOP correction unit 54 corrects the first conversion signal Si and the second conversion signal Co such that the error when the gap G is the design value and the error when the gap G is deviated from the design value approach 0. The GOP correction unit 54 derives the tan θ using Mathematical Formula 1. The GOP correction unit 54 transmits information of the derived tan θ to the position calculation unit 55.

In the example shown in the present embodiment, as shown in FIG. 11, when the mechanical angle is in an angle range of 0° to 24° and is 0°, 12°, and 21°, the reference error is 0. The reference error is on the plus side which is larger than 0 when the mechanical angle is in a range of 0° to 12° and in a range of 21° to 24°, and is on the minus side which is less than 0 when the mechanical angle is in a range of 12° to 21°. That is, the reference error has a wave shape that changes alternately between the plus side and the minus side in the angle range of the mechanical angle of 0° to 24°.

The out-of-reference error, when the gap G is the near gap of 2 mm and 2.5 mm, is larger than the reference error in a case where the mechanical angle is in the range of about 2° to about 10° and the values of the errors are compared to each other at the same mechanical angle. The out-of-reference error, when the gap G is the near gap of 2 mm and 2.5 mm, is smaller than the reference error in a case where the mechanical angle is in the range of 0° to about 2° and in the range of 10° to about 24° and the values of the errors are compared to each other at the same mechanical angle.

Thus, the out-of-reference error, when the gap G is the near gap, changes in a wave shape in the angle range of the mechanical angle of 0° to 24° like the reference error, intersects the reference error, and changes in the value. The value of the out-of-reference error, when the gap G changing in a wave shape is the near gap, changes according to the change in the value of the reference error. That is, the value of the out-of-reference error, when the gap G is the near gap, is on the plus side within a range substantially the same as the range of the mechanical angle in which the reference error is on the plus side. The value of the out-of-reference error, when the gap G is the near gap, is on the minus side in the substantially same range as the range of the mechanical angle in which the reference error is on the minus side.

The out-of-reference error, when the gap G is the far gap of 3.5 mm and 4 mm, is smaller than the reference error in a case where the mechanical angle is in the range of about 0° to about 13° and in the range of 22° to about 24° and the values of the errors are compared to each other at the same mechanical angle. The out-of-reference error, when the gap G is the far gap of 3.5 mm and 4 mm, is larger than the reference error in a case where the mechanical angle is in the range of 13° to about 22° and the values of the errors are compared to each other at the same mechanical angle.

Thus, the out-of-reference error, when the gap G is the far gap, changes in a wave shape in the angle range of the mechanical angle of 0° to 24° like the reference error, intersects the reference error, and changes in the value. The value of the out-of-reference error, when the gap G changing in a wave shape is the far gap, changes according to the change in the value of the reference error. That is, the value of the out-of-reference error, when the gap G is the far gap, is on the plus side within a range substantially the same as the range of the mechanical angle in which the reference error is on the plus side. The value of the out-of-reference error, when the gap G is the far gap, is on the minus side in the substantially same range as the range of the mechanical angle in which the reference error is on the minus side.

The position calculation unit 55 calculates the rotation angle θ which is a detection body position before correction (that is, a pre-correction detection body position) of the rotation member 20 by using the information of the tan θ derived by the GOP correction unit 54. In the present embodiment, the position calculation unit 55 calculates the rotation angle θ of the rotation member 20 by using the tan θ derived by Mathematical Formula 1.

The section correction unit 56 is coupled to the position calculation unit 55 and the output unit 57, and outputs, to the output unit 57, a correction rotation angle θa obtained by correcting the rotation angle θ which is the pre-correction detection body position calculated by the position calculation unit 55. In the present embodiment, the section correction unit 56 calculates the correction rotation angle θa by performing section correction by using an error of the calculated rotation angle θ and a correction function shown in the following Mathematical Formula 2.

(Mathematical Formula 2)

$$y = \alpha x + \beta$$

In Mathematical Formula 2, y indicates the correction rotation angle θa which is an output value, and x indicates the rotation angle θ calculated by the position calculation unit 55. In Mathematical Formula 2, α indicates an inclination correction value, and β indicates an offset correction value.

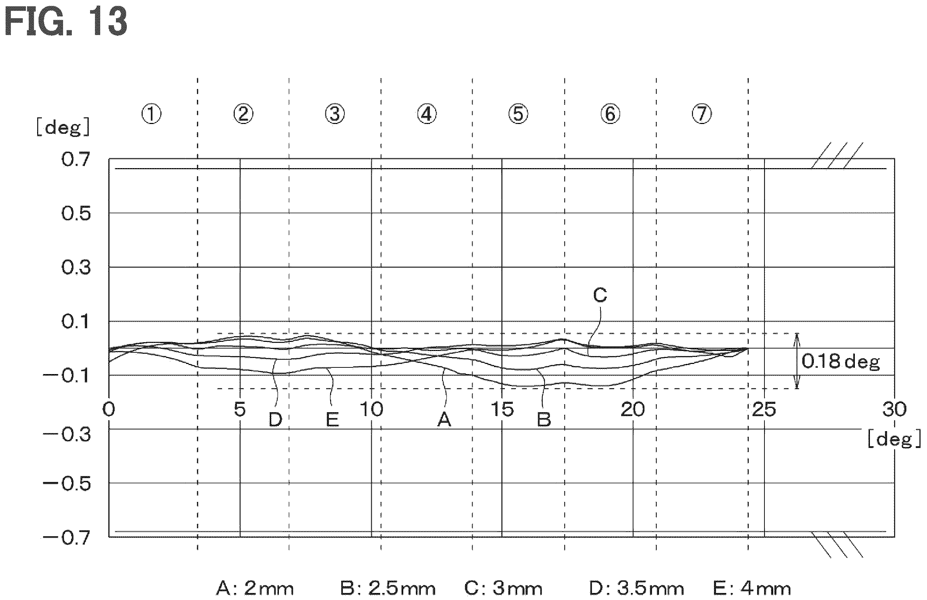

The section correction unit 56 derives the inclination correction value α and the offset correction value β for each of multiple sections (that is, a rotation angle range) such that the reference error approaches 0 for each section set in advance. In the example of the present embodiment, as shown in FIG. 13, the angle range of 0° to 24°, which is the detection range, is divided into seven sections.

The correction function shown in Mathematical Formula 2 indicates a relationship between a mechanical angle and an error of the rotation angle $\theta$ in each of the seven sections, and is based on the rotation angle $\theta$ calculated by the position calculation unit 55. The section correction unit 56 derives the inclination correction value $\alpha$ and the offset correction value $\beta$ for each of the seven sections. The section correction unit 56 calculates the correction rotation angle $\theta a$ by correcting the rotation angle $\theta$ for each of the seven sections by using the rotation angle $\theta$ calculated by the position calculation unit 55, the derived inclination correction value $\alpha$, and the offset correction value $\beta$.

Accordingly, as shown in FIG. 13, a reference error of the correction rotation angle $\theta a$ can be made closer to 0 in comparison with a reference error of the rotation angle $\theta$ shown in FIG. 13, with the gap G being 3 mm which is a design value.

In the section correction unit 56, the position calculation unit 55 calculates the correction rotation angle $\theta a$ based on the rotation angle $\theta$ obtained by performing the arc tangent conversion using the first conversion signal Si and the second conversion signal Co. As described above, the zeroth-order component of the frequency component is superimposed on the first conversion signal Si and the second conversion signal Co, which are used for obtaining the rotation angle $\theta$. The zeroth-order component superimposed on the first conversion signal Si and the second conversion signal Co is a factor that causes the error included in the rotation angle $\theta$ to be larger than the high-order component of the frequency component. This is because when the rotation angle $\theta$ is obtained by performing the arc tangent conversion on the first conversion signal Si and the second conversion signal Co, the zeroth-order component superimposed on the first conversion signal Si and the second conversion signal Co becomes a primary component.

The first conversion signal Si corrected by the GOP correction unit 54 includes an offset, which changes according to the amount of change in the amplitude of the first conversion signal Si, as a factor causing generation of the zeroth-order component. The second conversion signal Co corrected by the GOP correction unit 54 includes an offset, which changes according to the amount of change in the amplitude of the second conversion signal Co, as a factor causing generation of the zeroth-order component.

The section correction unit 56 according to the present embodiment performs the section correction using the correction function shown in Mathematical Formula 2 to remove the primary component included in the rotation angle $\theta$ which is obtained by performing the arc tangent conversion using the first conversion signal Si and the second conversion signal Co. In other words, the section correction unit 56 performs the section correction in order to remove the primary component remaining in the rotation angle $\theta$ which is obtained by performing the arc tangent conversion using the first conversion signal Si and the second conversion signal Co after the offset is adjusted by the GOP correction unit 54.

The section correction unit 56 may derive the inclination correction value $\alpha$ and the offset correction value $\beta$ for each of seven or less sections or for each of seven or more sections.

It is possible to reduce a difference between the largest error and the smallest error in all the out-of-reference errors. In the example shown in the present embodiment, the out-of-reference error is the largest error among all the out-of-reference errors when the gap G is the near gap of 2 mm and the mechanical angle is 8°. The out-of-reference error is the smallest error among all the out-of-reference errors when the gap G is the near gap of 2 mm and the mechanical angle is 16°. The difference between the largest error and the smallest error is 0.18 deg.

As described above, the value of the out-of-reference error for each of the gaps G of 2 mm, 2.5 mm, 3.5 mm, and 4 mm changes in a wave shape in the angle range of the mechanical angle of 0° to 24°, like the reference error. The value of the out-of-reference error is on the plus side within a range substantially the same as the range of the mechanical angle in which the reference error is on the plus side. The value of the out-of-reference error is on the minus side within a range substantially the same as the range of the mechanical angle in which the reference error is on the minus side.

Therefore, even when the gap G is out of the design value due to an assembly error and the like of the rotation member 20 and the substrate 30, the out-of-reference error can be brought close to 0 by using the inclination correction value $\alpha$ and the offset correction value $\beta$ derived such that the reference error approaches 0.

For example, the reference error is on the plus side which is larger than 0 when the mechanical angle is in the range of 0° to 12° and in the range of 21° to 24°. Therefore, by using the inclination correction value $\alpha$ and the offset correction value $\beta$ derived such that the reference error approaches 0, the reference error is decreased and brought close to 0 when the mechanical angle is in the range of 0° to 12° and in the range of 21° to 24°. That is, the reference error is corrected to the minus side when the mechanical angle is in the range of 0° to 12° and in the range of 21° to 24°.

By correcting the out-of-reference error using the inclination correction value $\alpha$ and the offset correction value $\beta$, the out-of-reference error is corrected to the minus side within the range of the mechanical angle in which the reference error is on the plus side. Therefore, the out-of-reference error which is on the plus side in the range of the mechanical angle substantially the same as that of the reference error can be corrected by using the inclination correction value $\alpha$ and the offset correction value $\beta$, and can be brought close to 0.

The reference error is on the minus side which is smaller than 0 when the mechanical angle is in the range of 12° to 21°. Therefore, by using the inclination correction value $\alpha$ and the offset correction value $\beta$ derived such that the reference error approaches 0, the reference error is increased and brought close to 0 when the mechanical angle is in the range of 12° to 21°. That is, the reference error is corrected to the plus side when the mechanical angle is in the range of 12° to 21°.

By correcting the out-of-reference error using the inclination correction value $\alpha$ and the offset correction value $\beta$, the out-of-reference error is corrected to the plus side within the range of the mechanical angle in which the reference error is on the minus side. Therefore, the out-of-reference error which is on the minus side in the range of the mechanical angle substantially the same as that of the reference error can be corrected by using the inclination correction value $\alpha$ and the offset correction value $\beta$, and can be brought close to 0.

Thus, when the correction rotation angle $\theta a$ is calculated using Mathematical Formula 2, the out-of-reference error can be brought close to 0 without deriving the inclination correction value $\alpha$ and the offset correction value $\beta$ for each gap G.

As described above, the signal processing unit 50 according to the present embodiment includes the GOP correction unit 54 that corrects the first conversion signal Si and the second conversion signal Co, and the position calculation unit 55 that calculates the rotation angle $\theta$ before correction based on the first conversion signal Si and the second conversion signal Co corrected by the GOP correction unit 54. The signal processing unit 50 further includes the section correction unit 56 that corrects the rotation angle $\theta$ for each of the seven sections to calculate the correction rotation angle $\theta a$. The GOP correction unit 54 corrects the first conversion signal Si and the second conversion signal Co such that each of the errors of the rotation angle $\theta$ approach 0 when the rotation member 20 and the substrate 30 are disposed such that the gaps G are 2 mm, 2.5 mm, 3 mm, 3.5 mm, and 4 mm. The section correction unit 56 derives the inclination correction value $\alpha$ and the offset correction value $\beta$ in the correction function for each of the seven sections.

According to this, when the interval between the rotation member 20 and the substrate 30 is set to be the gap G having the design value, the detection error can be reduced by correcting the rotation angle $\theta$ to the correction rotation angle $\theta a$, as compared with the case where no correction is made. That is, the detection accuracy of the position detection device 1 can be improved.

Even when the interval between the rotation member 20 and the substrate 30 is set to the gap G that deviates from the design value, the detection error can be reduced by correction by using the inclination correction value $\alpha$ and offset correction value $\beta$ when the interval is set to be the gap G having the design value.

According to the above embodiment, the following effects can be obtained.

(1) In the above embodiment, the rotation member 20 is a rotation body, and is rotatable within a rotation range of 0° to 24° which is smaller than 0° to 360°. The first reception coil 32 outputs the first voltage value V1 corresponding to the rotation angle $\theta$ of the rotation member 20 when the rotation member 20 rotates within a rotation range of 0° to 24°. The second reception coil 33 outputs the second voltage value V2 corresponding to the rotation angle $\theta$ of the rotation member 20 when the rotation member 20 rotates within a rotation range of 0° to 24°. The position calculation unit 55 calculates, based on the first voltage value V1 and the second voltage value V2 corresponding to the rotation angle $\theta$ of the rotation member 20, the rotation angle $\theta$ of the rotation member 20 that rotates within the rotation range of 0° to 24°. The GOP correction unit 54 corrects the first conversion signal Si and the second conversion signal Co such that the error of the rotation angle $\theta$ within the rotation range of 0° to 24° calculated by the position calculation unit 55 approaches 0.

According to this, the angle range in which the error of the rotation angle $\theta$ is brought close to 0 is limited, and thus an absolute value of an error for each angle within the rotation range is easily reduced as compared with a case where the angle range in which the error is brought close to 0 is not limited.

(2) In the above embodiment, the reference gap is set to a center of 2 mm farthest from the reference gap among 2 mm and 2.5 mm as the two near gaps and 4 mm farthest from the reference gap among 3.5 mm and 4 mm as the two far gaps.

According to this, the error of the rotation angle $\theta$ is easily reduced as compared with a case where the reference gap is not set as described above. That is, the detection accuracy of the position detection device 1 is easily improved.

(First Modification of First Embodiment)

In the first embodiment described above, the example is described in which the position detection device 1 calculates the rotation position of the rotation member 20 that rotates within the angle range of 0° to 24°, which is smaller than 0° to 360°, but the rotation position calculated by the position detection device 1 is not limited to this. For example, the position detection device 1 may calculate the rotation position of the rotation member 20 that rotates within an angle range smaller than 0° to 360° and different from 0° to 24°. The position detection device 1 may calculate the rotation position of the rotation member 20 that rotates within an angle range of 0° to 360°. The detection body calculated by the position detection device 1 is not limited to the pedal in the case of a rotation body.

(Second Modification of First Embodiment)

In the above first embodiment, the example is described in which the GOP correction unit 54 derives the first correction term and the second correction term such that the difference between the reference error and each of the four out-of-reference errors becomes smaller with the reference error as a reference, but the present disclosure is not limited thereto.

For example, a center value, in five errors of the reference error and the four out-of-reference errors, is used as a reference value. The first correction term and the second correction term may be derived such that a difference, between the reference value and each of the reference error and the four out-of-reference errors, becomes smaller.

(Third Modification of First Embodiment)

In the first embodiment described above, the example is described in which the first correction term and the second correction term are derived by an external device different from the position detection device 1, but the present disclosure is not limited thereto. For example, the position detection device 1 may derive the first correction term and the second correction term by the above-described derivation method. Specifically, a configuration device (for example, the GOP correction unit 54) of the signal processing unit 50 in the position detection device 1 may derive the first correction term and the second correction term. The position detection device 1 may include a correction term derivation unit for deriving the first correction term and the second correction term.

(Fourth Modification of First Embodiment)

In the first embodiment described above, the example is described in which the GOP correction unit 54 corrects the first conversion signal Si and the second conversion signal Co and derives the tan θ using the corrected first conversion signal Si and second conversion signal Co and Mathematical Formula 1, but the present disclosure is not limited thereto. For example, the position calculation unit 55 may derive the tan θ by using the first conversion signal Si and the second conversion signal Co corrected by the GOP correction unit 54 and Mathematical Formula 1.

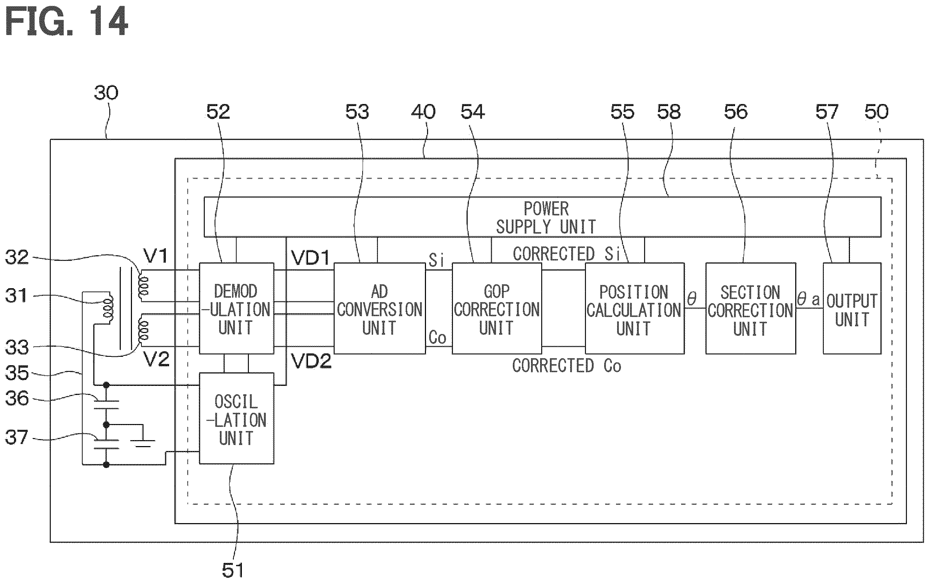

In such a configuration, as shown in FIG. 14, the GOP correction unit 54 corrects the first conversion signal Si and the second conversion signal Co using at least one correction term among the gain correction term, the offset correction term, and the phase correction term. Information of the corrected first conversion signal Si and second conversion signal Co is output to the position calculation unit 55.

When the information of the first conversion signal Si and the second conversion signal Co corrected by the GOP correction unit 54 is received, the position calculation unit 55 may calculate the tan θ based on Mathematical Formula 1 and calculate the rotation angle θ of the rotation member 20 using the calculated tan θ.

(Second Embodiment)

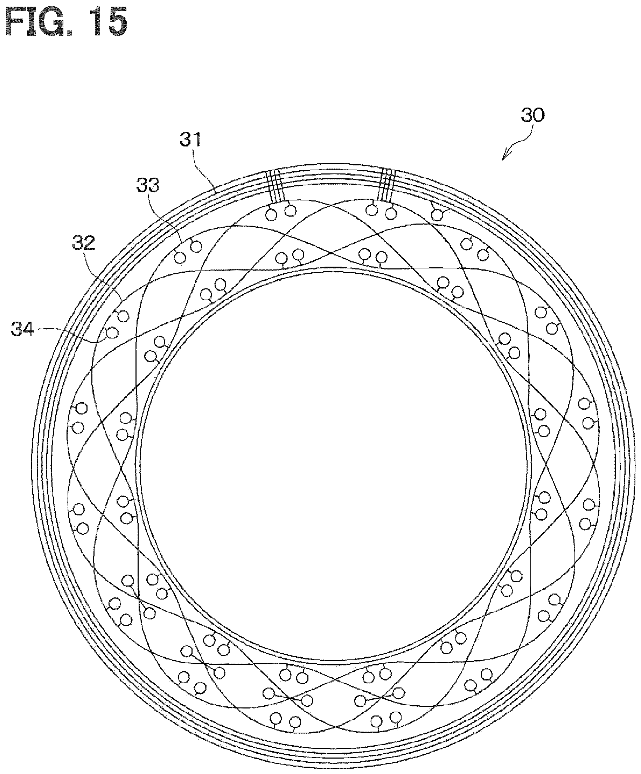

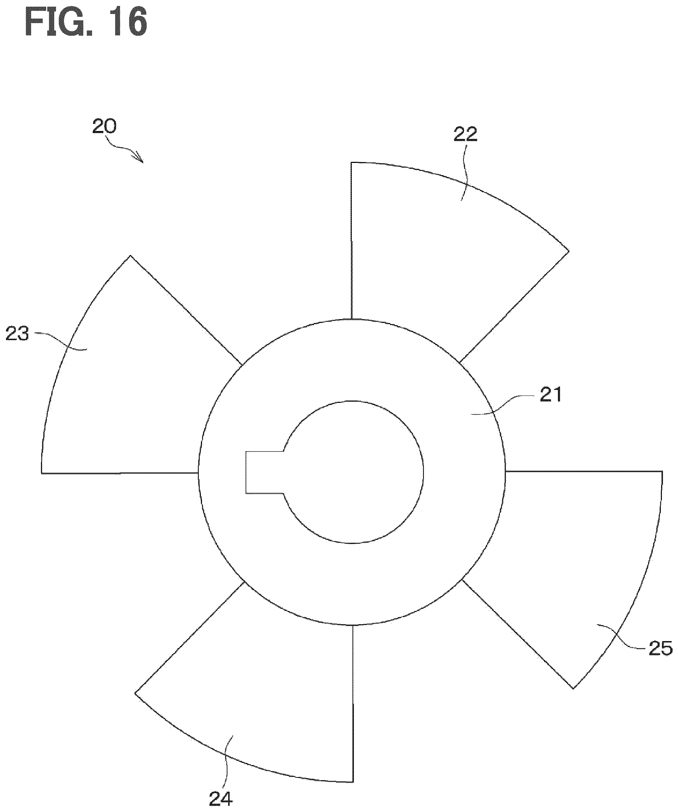

Next, a second embodiment will be described with reference to FIGS. 15 and 16. In the present embodiment, pattern shapes of the first reception coil 32 and the second reception coil 33 are different from those of the first embodiment. The other configuration is the same as that of the first embodiment. Therefore, in the present embodiment, portions different from those of the first embodiment will be mainly described, and description of portions similar to those of the first embodiment may be omitted.

As shown in FIG. 15, the first reception coil 32 and the second reception coil 33 according to the present embodiment are formed in an annular shape extending along the circumferential direction Dc of the substrate 30.

The first reception coil 32 and the second reception coil 33 are disposed inside the transmission coil 31 when viewed in a direction along the normal direction. The first reception coil 32 and the second reception coil 33 are appropriately coupled to different wiring layers via the via 34 so as not to interfere with each other (that is, not to overlap in the same layer).

The first reception coil 32 is formed in a pattern shape that draws a sine curve so as to have a sine wave shape in a closed loop. In the first reception coil 32, two adjacent wiring layers among the wiring layers stacked in order are coupled to each other via the via 34.

The second reception coil 33 is formed in a pattern shape that draws a cosine curve having a different phase from that of the sine curve so as to have a cosine wave shape in a closed loop. In the second reception coil 33, two adjacent wiring layers among the wiring layers stacked in order are coupled to each other via the via 34.

In display of the first reception coil 32 and the second reception coil 33 in FIG. 15, in order to make it easy to understand, the first reception coils 32 and the second reception coils 33 provided over the multiple stacked wiring layers are all displayed by solid lines.

The first reception coil 32 may be formed in a pattern shape that draws a cosine curve so as to have a cosine wave shape in a closed loop. In this case, the second reception coil 33 is formed in a pattern shape that draws a sine curve having a different phase from that of the cosine curve so as to have a sine wave shape in a closed loop.

As shown in FIG. 16, the four targets 22 to 25 of the rotation member 20 according to the present embodiment each have a fan shape in which a width in the circumferential direction Dc increases toward the outer side of the radial direction Dr. Therefore, one side end portion and the other side end portion in the circumferential direction Dc of each of the four targets 22 to 25 extend linearly along the radial direction Dr when viewed in the direction along the axial direction Da.

According to the present embodiment, the first reception coil 32 and the second reception coil 33 each form a pattern shape that draws a sine curve or a cosine curve when viewed in the direction along the normal direction. Accordingly, the first reception coil 32 outputs the first voltage value V1 having a sine wave shape corresponding to the rotation position of the rotation member 20. The second reception coil 33 outputs the second voltage value V2 having a cosine wave shape corresponding to the rotation position of the rotation member 20.

Except for what has been described above, the present embodiment is the same as the first embodiment. The present embodiment can obtain the same effects as those of the first embodiment which are obtained from the same configuration as those of the first embodiment.

(Third Embodiment)

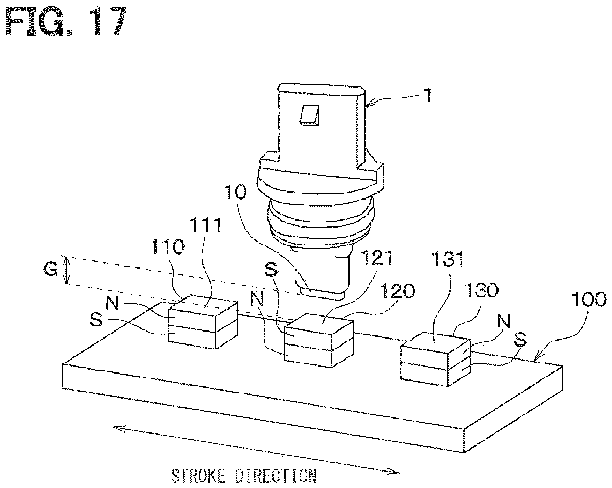

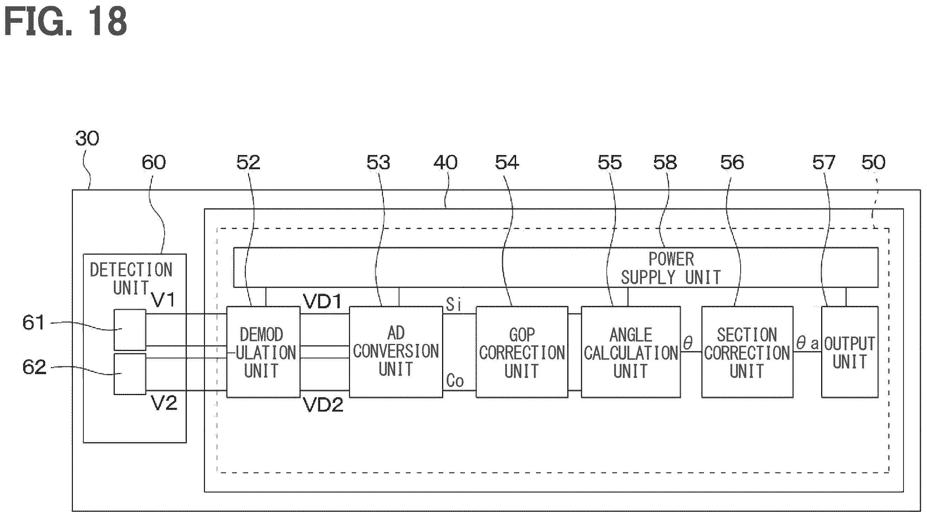

Next, a third embodiment will be described with reference to FIGS. 17 and 18. The present embodiment is different from the first embodiment in the shape and configuration of the position detection device 1. The other configuration is the same as that of the first embodiment. Therefore, in the present embodiment, portions different from those of the first embodiment will be mainly described, and description of portions similar to those of the first embodiment may be omitted.

The position detection device 1 according to the present embodiment is capable of detecting a position of a detection body in a stroke direction. The detection body is, for example, a movable component 100 mounted on a vehicle. The position detection device 1 detects the position of the movable component 100 that is a detection body that moves along the stroke direction.

The movable component 100 according to the present embodiment straightly reciprocates in within a predetermined range along the stroke direction. As shown in FIG. 17, the movable component 100 includes multiple magnets 110, 120, and 130. The multiple magnets 110, 120, and 130 are disposed apart from each other along the stroke direction. The multiple magnets 110, 120, and 130 includes magnetic pole surfaces 111, 121, and 131 each having a polarity of N pole or S pole. The multiple magnets 110, 120, and 130 are disposed such that the magnetic pole surfaces 111, 121, and 131 adjacent to each other have opposite polarities to each other in N pole and S pole.

The position detection device 1 includes a case portion 10 in which a detection unit 60 to be described later is provided at a tip portion on the side of the movable component 100. The position detection device 1 is provided with a predetermined interval between the case portion 10 and the magnetic pole surfaces 111, 121, and 131 of the multiple magnets 110, 120, and 130. In other words, the case portion 10 faces the movable component 100 in a state of being separated from the multiple magnets 110, 120, and 130. The case portion 10 is disposed such that a predetermined interval between the case portion 10 and the magnetic pole surfaces 111, 121, and 131 is constant. The gap G in the present embodiment corresponds to the distance between the case portion 10 and the magnetic pole surfaces 111, 121, and 131.

In the position detection device 1 according to the present embodiment, a magnetic detection method using magneto resistive elements 61 and 62 shown in FIG. 18, in which a resistance value changes when being influenced by a magnetic field from the outside, is adopted, and the magneto resistive elements 61 and 62 are provided inside the case portion 10. The magneto resistive elements 61 and 62 may be, for example, an anisotropic magneto resistive (AMR) element, a giant magneto resistive (GMR) element, a tunnel magneto resistive (TMR) element.

Instead of the magneto resistive elements 61 and 62, a hall element can be adopted, and the position detection device 1 can be used as the magnetic detection method using the hall element.

As shown in FIG. 18, the detection unit 60 includes the two magneto resistive elements 61 and 62 functioning as magnetic detection units. The two magneto resistive elements 61 and 62 acquire, as a voltage value, the change in the resistance value when being influenced by the magnetic field. Hereinafter, one of the two magneto resistive elements 61 and 62 is referred to as a first magnetic detection unit 61, and the other is referred to as a second magnetic detection unit 62.

The first magnetic detection unit 61 outputs the first voltage value V1 having a sine wave shape according to a position of the movable component 100. The second magnetic detection unit 62 outputs the second voltage value V2 having a cosine wave shape according to the position of the movable component 100. Therefore, in the present embodiment, the detection unit 60 functions as a signal output unit that outputs a first signal having a sine wave shape and a second signal having a cosine wave shape corresponding to the position of the movable component 100 which is a detection body. The case portion 10 functions as an arrangement unit.

Except for what has been described above, the present embodiment is the same as the first embodiment. The present embodiment can obtain the same effects as those of the first embodiment which are obtained from the same configuration as those of the first embodiment.

(Fourth Embodiment)

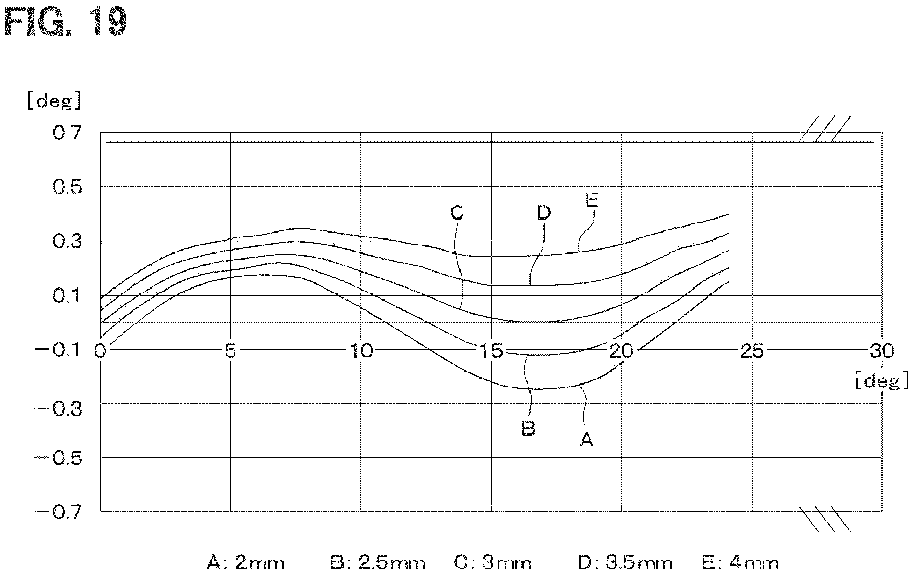

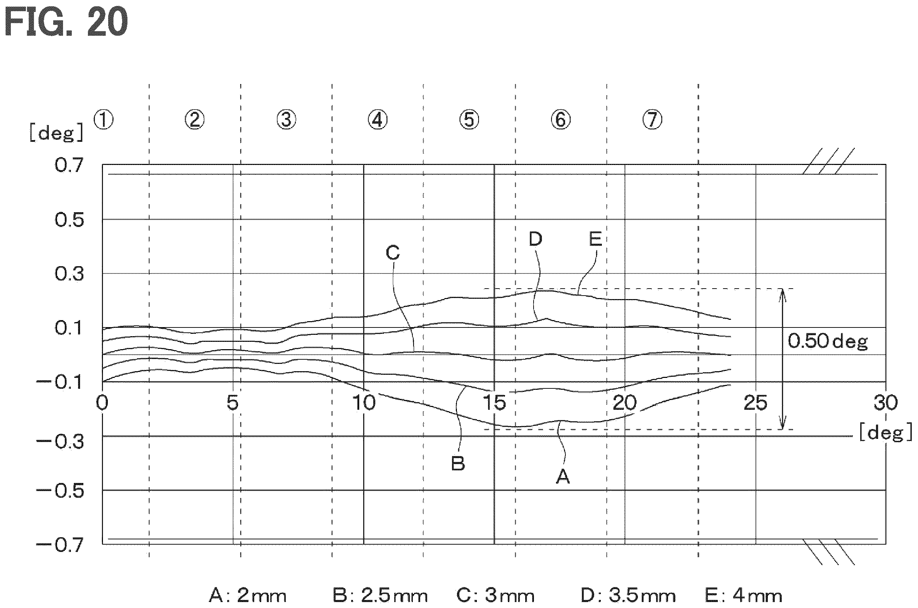

Next, a fourth embodiment will be described with reference to FIGS. 19 and 20. The present embodiment is different from the first embodiment in the derivation method for the first correction term and the second correction term. The other configuration is the same as that of the first embodiment. Therefore, in the present embodiment, portions different from those of the first embodiment will be mainly described, and description of portions similar to those of the first embodiment may be omitted.

In the present embodiment, the first correction term and the second correction term are derived such that an error when the gap G is a design value is minimized within an angle range of 0° to 24°.

Specifically, a first gain correction term, a first offset correction term, a second gain correction term, and a second offset correction term are derived such that a reference error for each mechanical angle within the angle range of 0° to 24° approaches 0. At this time, in the present embodiment, the first gain correction term, the first offset correction term, the second gain correction term, and the second offset correction term are derived without considering an out-of-reference error for each mechanical angle within the angle range of 0° to 24°.

Accordingly, as shown in FIG. 19, an error of the rotation angle θ for each mechanical angle when the gap G is the design value can be reduced. By using the first correction term and the second correction term derived such that the error of the rotation angle θ for each mechanical angle when the gap G is the design value is reduced, the error of the rotation angle θ for each mechanical angle when the gap G is deviated from the design value can also be reduced.

As shown in FIG. 19, the reference error has a wave shape that changes alternately between the plus side and the minus side in the angle range of the mechanical angle of 0° to 24°.

The out-of-reference error, when the gap G is 2 mm and 2.5 mm as the near gaps, changes in a wave shape like the reference error. The value of the out-of-reference error changes according to the change in the value of the reference error. When the mechanical angle is in the entire detection range of 0° to 24°, the value of the error is smaller than the reference error in a case of comparison at the same mechanical angle. Therefore, the out-of-reference error in the case of the near gap does not intersect the reference error, and the value of the out-of-reference error changes.

The out-of-reference error, when the gap G is 3.5 mm and 4 mm as the far gaps, changes in a wave shape like the reference error. The value of the out-of-reference error changes according to the change in the value of the reference error. When the mechanical angle is in the entire detection range of 0° to 24°, the value of the error is larger than the reference error in a case of comparison at the same mechanical angle. Therefore, the out-of-reference error in the case of the far gap does not intersect the reference error, and the value of the out-of-reference error changes.

The GOP correction unit 54 corrects the first conversion signal Si and the second conversion signal Co using the first gain correction term, the first offset correction term, the second gain correction term, and the second offset correction term, which are derived as described above. The GOP correction unit 54 derives the tan θ using Mathematical Formula 1. The GOP correction unit 54 transmits information of the derived tan θ to the position calculation unit 55.

The position calculation unit 55 calculates the rotation angle θ before correction of the rotation member 20 by using the information of the tan θ derived by the GOP correction unit 54. The section correction unit 56 calculates the correction rotation angle θa by performing the section correction by using the rotation angle θ before correction calculated by the position calculation unit 55 and Mathematical Formula 2 described in the first embodiment.

Similarly to the first embodiment, the section correction unit 56 derives the inclination correction value α and the offset correction value β such that the reference error approaches 0 for each of the seven sections in the angle range of 0° to 24 which is the detection range. The section correction unit 56 calculates the correction rotation angle θa using the rotation angle θ calculated by the position calculation unit 55, the derived inclination correction value α, and the offset correction value β.

Accordingly, as shown in FIG. 20, a reference error of the correction rotation angle θa can be made closer to 0 in comparison with a reference error of the rotation angle θ shown in FIG. 19, with the gap G being 3 mm which is a design value.

It is possible to reduce a difference between the largest error and the smallest error in all the out-of-reference errors. In the present embodiment, the out-of-reference error is the largest error among all the out-of-reference errors when the gap G is 4 mm and the mechanical angle is 18°. The out-of-reference error is the smallest error among all the out-of-reference errors when the gap G is 2 mm and the mechanical angle is 16°. The difference between the largest error and the smallest error is 0.50 deg.

(Summary of Fourth Embodiment)

The fourth embodiment is configured as described above. Therefore, in summary, the following aspects are provided.

(Aspect 1)

A position detection device for detecting a position of a detection body (20, 100), the position detection device comprising:

a signal output unit (32, 33, 61, 62) configured to output a first signal (V1) having a sine wave shape corresponding to a position of the detection body, and a second signal (V2) different in phase from the first signal and having a cosine wave shape corresponding to the position of the detection body;
an arrangement unit (30, 10) provided with the signal output unit and facing the detection body in a state of being spaced apart from the detection body; and
a signal processing unit (50) configured to calculate, based on the first signal and the second signal output from the signal output unit, a detection body position which is a position of the detection body when the detection body is displaced in a predetermined detection range, wherein
the signal processing unit includes

a signal correction unit (54) configured to correct the first signal and the second signal,
a position calculation unit (55) configured to calculate a pre-correction detection body position based on the first signal and the second signal corrected by the signal correction unit, the pre-correction detection body position being the detection body position before correction, and
a section correction unit (56) configured to

calculate a correction function based on an error of the pre-correction detection body position calculated by the position calculation unit, and
correct the pre-correction detection body position calculated by the position calculation unit for each of sections of the detection range using the correction function,

an interval between the detection body and the arrangement unit in a facing direction in which the detection body and the arrangement unit face each other is defined as a gap (G),
the gap that serves as a reference is defined as a reference gap,
the gap smaller than the reference gap is defined as a near gap,
the gap larger than the reference gap is defined as a far gap,
the signal correction unit is configured to bring each of errors of the pre-correction detection body position occurring when the gap is at the near gap and/or the far gap to approach 0 by correcting the first signal and the second signal such that an error of the pre-correction detection body position occurring when the gap is at the reference gap approaches 0, and
the section correction unit is configured to derive a correction value used in the correction function for each of the sections.

(Fifth Embodiment)

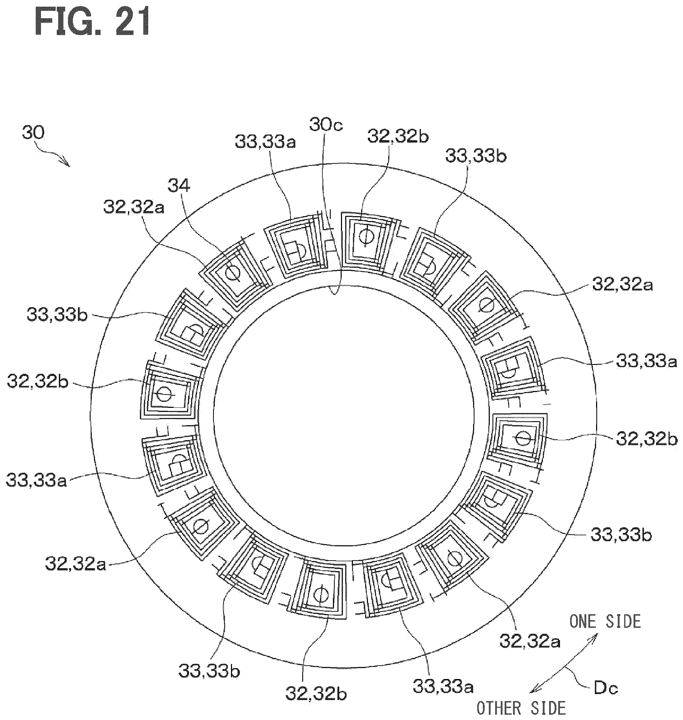

Next, a fifth embodiment will be described with reference to FIG. 21. The present embodiment is different from the first embodiment in that the transmission coil 31 is not provided on the substrate 30. The other configuration is the same as that of the first embodiment. Therefore, in the present embodiment, portions different from those of the first embodiment will be mainly described, and description of portions similar to those of the first embodiment may be omitted.

As shown in FIG. 21, unlike the first embodiment, the wiring pattern of the transmission coil 31 is not provided on the substrate 30 according to the present embodiment. As described in the first embodiment, the first reception coil 32 and the second reception coil 33 mainly have a spiral shape. In the present embodiment, the first reception coil 32 and the second reception coil 33 provided on the substrate 30 function as inductance elements having a predetermined inductance when an alternating current is applied from the oscillation unit 51. In FIG. 21, illustration of the coupling wiring 35 is omitted.

When such a substrate 30 does not have the transmission coil 31, an eddy current generated in the rotation member 20 changes according to the rotation position of the rotation member 20. For example, when the rotation member 20 rotates and the rotation position of the first target 22 facing the first reception coil 32 and the second reception coil 33 changes, an eddy current generated in the first target 22 changes.

Inductances of the first reception coil 32 and the second reception coil 33 facing the first target 22 change. Such a change in the inductance can be detected by a detection circuit (not shown). The detection circuit is formed by a resonance circuit including, for example, a coil and a capacitor. In other words, the first reception coil 32 outputs the change in the inductance of the first reception coil 32 that changes according to the rotation position of the rotation member 20. The second reception coil 33 outputs the change in the inductance of the second reception coil 33 that changes according to the rotation position of the rotation member 20.

The change in the inductance of each of the first reception coil 32 and the second reception coil 33 detected by the detection circuit periodically changes according to the rotation position of the rotation member 20. The detection circuit outputs, to the AD conversion unit 53, information on the change in the inductance of each of the first reception coil 32 and the second reception coil 33 to be detected. The information on the change in the inductance of the first reception coil 32 output by the detection circuit corresponds to the first voltage value V1 in the first embodiment. The information on the change in the inductance of the second reception coil 33 output by the detection circuit corresponds to the second voltage value V2 in the first embodiment.

Except for what has been described above, the present embodiment is the same as the first embodiment. The present embodiment can obtain the same effects as those of the first embodiment which are obtained from the same configuration as those of the first embodiment.


(Other Embodiments)

Although the representative embodiments of the present disclosure are described above, the present disclosure is not limited to the embodiments described above, and various modifications can be made, for example, as follows.

In the embodiments described above, the reference gap is 3 mm, which is the design value, and the gap G deviating from the design value is 2 mm, 2.5 mm, 3.5 mm, and 4 mm. The example is described in which the reference gap is 3 mm as a center between 2 mm and 4 mm, which are farthest from the reference gap, but the present disclosure is not limited thereto.

The reference gap is not limited to 3 mm, and may be changed as appropriate. The gap G deviated from the design value may include a gap having a size smaller than 2 mm, or may include a gap larger than 4 mm. The gap G deviated from the design value may include one or three or more near gaps. The gap G deviated from the design value may include one or three or more far gaps. The reference gap may be set to a size deviated from a center between a size that is farthest from the reference gap among multiple near gaps and a size that is farthest from the reference gap among multiple far gaps.

In the embodiments described above, the example is described in which the gain correction term and the offset correction term among the gain correction term, the offset correction term, and the phase correction term for each of the first conversion signal Si and the second conversion signal Co are derived by the GOP correction unit 54, but the present disclosure is not limited thereto.

For example, the GOP correction unit 54 may derive one of the gain correction term, the offset correction term, and the phase correction term for each of the first conversion signal Si and the second conversion signal Co. Specifically, the GOP correction unit 54 may derive, for example, only one correction term among the gain correction term, the offset correction term, and the phase correction term for each of the first conversion signal Si and the second conversion signal Co. The GOP correction unit 54 may derive any two correction terms among the gain correction term, the offset correction term, and the phase correction term for each of the first conversion signal Si and the second conversion signal Co. The GOP correction unit 54 may derive all of the gain correction term, the offset correction term, and the phase correction term for each of the first conversion signal Si and the second conversion signal Co.

In the embodiments described above, it is needless to say that the elements forming the embodiments are not necessarily essential except in a case where those elements are clearly indicated to be essential in particular, a case where those elements are considered to be obviously essential in principle, and the like.

In the embodiments described above, when referring to the number, the numerical value, the amount, the range, and the like of the components of the embodiment, the present disclosure is not limited to a specific number of components of the embodiments, except in a case of being particularly noted as being essential, a case of being limited to a specific number in principle, and the like.

In the embodiments described above, when referring to the shape, the positional relationship, and the like of the component and the like, the present disclosure is not limited to the shape, the positional relationship, and the like, except in a case of being particularly noted, a case of being limited to a specific shape, a specific positional relationship in principle, and the like.

The signal processing circuit 40 and the method therefor of the present disclosure may be implemented by a dedicated computer provided by including a processor and a memory that are programmed to execute one or more functions embodied by a computer program. The signal processing circuit 40 and the method therefor of the present disclosure may be implemented by a dedicated computer provided by including a processor with one or more dedicated hardware logic circuits. The signal processing circuit 40 and the method therefor of the present disclosure may be implemented by one or more dedicated computers, each including a combination of a processor and a memory that are programmed to execute one or more functions and a processor formed of one or more hardware logic circuits. The computer program may be stored in a computer-readable non-transient tangible recording medium, as an instruction executed by a computer.

(Features of the present disclosure)

[Claim 1]

A position detection device for detecting a position of a detection body (20, 100), the position detection device comprising:

a signal output unit (32, 33, 61, 62) configured to output a first signal (V1) having a sine wave shape corresponding to a position of the detection body, and a second signal (V2) different in phase from the first signal and having a cosine wave shape corresponding to the position of the detection body;
an arrangement unit (30, 10) provided with the signal output unit and facing the detection body in a state of being spaced apart from the detection body; and
a signal processing unit (50) configured to calculate, based on the first signal and the second signal, a detection body position which is a position of the detection body when the detection body is displaced in a predetermined detection range, wherein
the signal processing unit is configured to

correct the first signal and the second signal,
calculate a pre-correction detection body position based on the corrected first signal and second signal, the pre-correction detection body position being the detection body position before correction,
calculate a correction function based on an error of the calculated pre-correction detection body position, and
correct the pre-correction detection body position calculated for each of sections of the detection range using the correction function,

an interval between the detection body and the arrangement unit in a facing direction in which the detection body and the arrangement unit face each other is defined as a gap (G),
the gap that serves as a reference is defined as a reference gap,
the gap smaller than the reference gap is defined as a near gap,
the gap larger than the reference gap is defined as a far gap, and
the signal processing unit is configured to

correct the first signal and the second signal such that each of errors of the pre-correction detection body position approach 0, the errors including errors occurring when the gap is at the reference gap, one or different near gaps, and one or different far gaps, and
derive a correction value used in the correction function for each of the sections.

[Claim 2] A position detection device for detecting a position of a detection body (20, 100), the position detection device comprising:

a signal output unit (32, 33, 61, 62) configured to output a first signal (V1) having a sine wave shape corresponding to a position of the detection body, and a second signal (V2) different in phase from the first signal and having a cosine wave shape corresponding to the position of the detection body;
an arrangement unit (30, 10) provided with the signal output unit and facing the detection body in a state of being spaced apart from the detection body; and
a signal processing unit (50) configured to calculate, based on the first signal and the second signal, a detection body position which is a position of the detection body when the detection body is displaced in a predetermined detection range, wherein
the signal processing unit includes

a signal correction unit (54) configured to correct the first signal and the second signal,
a position calculation unit (55) configured to calculate a pre-correction detection body position based on the first signal and the second signal corrected by the signal correction unit, the pre-correction detection body position being the detection body position before correction, and
a section correction unit (56) configured to

calculate a correction function based on an error of the pre-correction detection body position calculated

EP 4 621 355 A1

by the position calculation unit, and
correct the pre-correction detection body position calculated by the position calculation unit for each of sections of the detection range using the correction function,

an interval between the detection body and the arrangement unit in a facing direction in which the detection body and the arrangement unit face each other is defined as a gap (G),
the gap that serves as a reference is defined as a reference gap,
the gap smaller than the reference gap is defined as a near gap,
the gap larger than the reference gap is defined as a far gap,
the signal correction unit is configured to correct the first signal and the second signal such that each of errors of the pre-correction detection body position approach 0, the errors including errors occurring when the gap is at the reference gap, one or different near gaps, and one or different far gaps, and
the section correction unit is configured to derive a correction value used in the correction function for each of the sections.

[Claim 3] The position detection device according to claim 2, wherein

the detection body is a rotation body rotatable within a predetermined rotation range smaller than a range from 0° to 360°,
the signal output unit is configured to output the first signal and the second signal according to a rotation angle of the detection body when the detection body rotates within the predetermined rotation range,
the signal correction unit is configured to correct the first signal and the second signal such that the error of the pre-correction detection body position within the predetermined rotation range calculated by the position calculation unit approaches 0, and
the position calculation unit is configured to calculate the pre-correction detection body position within the predetermined rotation range based on the first signal and the second signal corrected by the signal correction unit.

[Claim 4] The position detection device according to claim 2 or 3, wherein
the reference gap is set to be a midpoint between a near gap farthest from the reference gap among the one or different near gaps and a far gap farthest from the reference gap among the one or different far gaps.
[Claim 5] The position detection device according to any one of claim 1 to 4, wherein
the signal correction unit is configured to correct at least one of a phase, a gain, and an offset of the first signal, and correct at least one of a phase, a gain, and an offset of the second signal.
[Claim 6] The position detection device according to claim 5, wherein
the signal correction unit is configured to correct the offset of the first signal and the offset of the second signal such that a difference between the error of the pre-correction detection body position occurring when the gap is at the reference gap and the error of the pre-correction detection body position occurring when the gap is at the far gap approaches 0.
[Claim 7] The position detection device according to claim 5, wherein

the signal processing unit is configured to calculate, based on the first signal and the second signal, the detection body position by calculating an arc tangent function and performing arc tangent conversion, and
the signal correction unit is configured to correct the offset of the first signal and the offset of the second signal such that a primary component obtained by the signal processing unit performing the arc tangent conversion on the first signal and the second signal when the gap is at the far gap approaches a primary component obtained by the signal processing unit performing the arc tangent conversion on the first signal and the second signal when the gap is at the near gap.

[Claim 8] The position detection device according to claim 7, wherein

the offset of the first signal includes a first static offset which is an offset component independent of a change in an amplitude of the first signal, and a first variable offset which is an offset component which changes according to the change in the amplitude of the first signal,
the offset of the second signal includes a second static offset which is an offset component independent of a change in an amplitude of the second signal, and a second variable offset which is an offset component which changes according to the change in the amplitude of the second signal,
the signal correction unit is configured to

25

adjust the first static offset such that a relationship between an amount of change in the amplitude of the first signal and an amount of change in the offset of the first signal based on the amount of change in the amplitude of the first signal becomes proportional, and

adjust the second static offset such that a relationship between an amount of change in the amplitude of the second signal and an amount of change in the offset of the second signal based on the amount of change in the amplitude of the second signal becomes proportional, and

the section correction unit is configured to correct the pre-correction detection body position calculated by the position calculation unit for each of the sections such that the primary component included in the detection body position calculated by performing the arc tangent conversion on the first signal and the second signal is removed.

[Claim 9] The position detection device according to any one of claims 1 to 8, wherein

the arrangement unit is a substrate,
the signal output unit is provided on the substrate and includes a transmission coil (31), a first reception coil (32) and a second reception coil (33),
the first reception coil and the second reception coil are configured to be inductively coupled with the transmission coil by electromagnetic induction caused by energization to the transmission coil,
the first reception coil is configured to output a first voltage value as the first signal corresponding to the detection body position, the first voltage value changing due to an influence of an eddy current induced in the detection body by the electromagnetic induction from the energized transmission coil,
the second reception coil is configured to output a second voltage value as the second signal corresponding to the position of the detection body, the second voltage value changing due to the influence of the eddy current induced in the detection body by the electromagnetic induction from the energized transmission coil, and
the signal processing unit is configured to calculate the detection body position based on the first voltage value and the second voltage value.

[Claim 10] The position detection device according to any one of claims 1 to 8, wherein

the arrangement unit is a substrate,
the signal output unit is provided on the substrate and includes a first reception coil (32) and a second reception coil (33) which are configured to be changed in inductance according to the detection body position,
the first reception coil is configured to output the first signal as an inductance change of the first reception coil that changes according to the detection body position,
the second reception coil is configured to output the second signal as an inductance change of the second reception coil that changes according to the detection body position, and
the signal processing unit is configured to calculate the detection body position based on the inductance change of the first reception coil and the inductance change of the second reception coil.

[Claim 11] The position detection device according to claim 9 or 10, wherein
the first reception coil and the second reception coil include a portion having a spiral pattern shape.
[Claim 12] The position detection device according to claim 9 or 10, wherein
one of the first reception coil and the second reception coil has a shape that follows a sine curve pattern, and the other of the first reception coil and the second reception coil has a shape that follows a cosine curve pattern different in phase from the sine curve pattern.
[Claim 13] The position detection device according to any one of claims 1 to 8, wherein

the detection body has a magnet (110, 120, 130), and
the signal output unit includes a first magnetic detection unit (61) and a second magnetic detection unit (62) which are configured to output the first signal and the second signal, respectively, based on a change in a magnetic field received from the magnet that changes according to the detection body position.

## Claims

1. A position detection device for detecting a position of a detection body (20, 100), the position detection device comprising:

a signal output unit (32, 33, 61, 62) configured to output a first signal (V1) having a sine wave shape corresponding to a position of the detection body, and a second signal (V2) different in phase from the first signal and having a cosine wave shape corresponding to the position of the detection body;

an arrangement unit (30, 10) provided with the signal output unit and facing the detection body in a state of being spaced apart from the detection body; and

a signal processing unit (50) configured to calculate, based on the first signal and the second signal, a detection body position which is a position of the detection body when the detection body is displaced in a predetermined detection range, wherein

the signal processing unit is configured to

correct the first signal and the second signal,

calculate a pre-correction detection body position based on the corrected first signal and second signal, the pre-correction detection body position being the detection body position before correction,

calculate a correction function based on an error of the calculated pre-correction detection body position, and

correct the pre-correction detection body position calculated for each of sections of the detection range using the correction function,

an interval between the detection body and the arrangement unit in a facing direction in which the detection body and the arrangement unit face each other is defined as a gap (G),

the gap that serves as a reference is defined as a reference gap,

the gap smaller than the reference gap is defined as a near gap,

the gap larger than the reference gap is defined as a far gap, and

the signal processing unit is configured to

correct the first signal and the second signal such that each of errors of the pre-correction detection body position approach 0, the errors including errors occurring when the gap is at the reference gap, one or different near gaps, and one or different far gaps, and

derive a correction value used in the correction function for each of the sections.

2. A position detection device for detecting a position of a detection body (20, 100), the position detection device comprising:

a signal output unit (32, 33, 61, 62) configured to output a first signal (V1) having a sine wave shape corresponding to a position of the detection body, and a second signal (V2) different in phase from the first signal and having a cosine wave shape corresponding to the position of the detection body;

an arrangement unit (30, 10) provided with the signal output unit and facing the detection body in a state of being spaced apart from the detection body; and

a signal processing unit (50) configured to calculate, based on the first signal and the second signal, a detection body position which is a position of the detection body when the detection body is displaced in a predetermined detection range, wherein

the signal processing unit includes

a signal correction unit (54) configured to correct the first signal and the second signal, a position calculation unit (55) configured to calculate a pre-correction detection body position based on the first signal and the second signal corrected by the signal correction unit, the pre-correction detection body position being the detection body position before correction, and

a section correction unit (56) configured to

calculate a correction function based on an error of the pre-correction detection body position calculated by the position calculation unit, and

correct the pre-correction detection body position calculated by the position calculation unit for each of sections of the detection range using the correction function,

an interval between the detection body and the arrangement unit in a facing direction in which the detection body and the arrangement unit face each other is defined as a gap (G),

the gap that serves as a reference is defined as a reference gap,

the gap smaller than the reference gap is defined as a near gap,

the gap larger than the reference gap is defined as a far gap,

the signal correction unit is configured to correct the first signal and the second signal such that each of errors of the pre-correction detection body position approach 0, the errors including errors occurring when the gap is at the reference gap, one or different near gaps, and one or different far gaps, and

the section correction unit is configured to derive a correction value used in the correction function for each of the sections.

3. The position detection device according to claim 2, wherein

the detection body is a rotation body rotatable within a predetermined rotation range smaller than a range from 0° to 360°,

the signal output unit is configured to output the first signal and the second signal according to a rotation angle of the detection body when the detection body rotates within the predetermined rotation range,

the signal correction unit is configured to correct the first signal and the second signal such that the error of the pre-correction detection body position within the predetermined rotation range calculated by the position calculation unit approaches 0, and

the position calculation unit is configured to calculate the pre-correction detection body position within the predetermined rotation range based on the first signal and the second signal corrected by the signal correction unit.

4. The position detection device according to claim 2 or 3, wherein
the reference gap is set to be a midpoint between a near gap farthest from the reference gap among the one or different near gaps and a far gap farthest from the reference gap among the one or different far gaps.

5. The position detection device according to claim 2 or 3, wherein
the signal correction unit is configured to correct at least one of a phase, a gain, and an offset of the first signal, and correct at least one of a phase, a gain, and an offset of the second signal.

6. The position detection device according to claim 5, wherein
the signal correction unit is configured to correct the offset of the first signal and the offset of the second signal such that a difference between the error of the pre-correction detection body position occurring when the gap is at the reference gap and the error of the pre-correction detection body position occurring when the gap is at the far gap approaches 0.

7. The position detection device according to claim 5, wherein

the signal processing unit is configured to calculate, based on the first signal and the second signal, the detection body position by calculating an arc tangent function and performing arc tangent conversion, and

the signal correction unit is configured to correct the offset of the first signal and the offset of the second signal such that a primary component obtained by the signal processing unit performing the arc tangent conversion on the first signal and the second signal when the gap is at the far gap approaches a primary component obtained by the signal processing unit performing the arc tangent conversion on the first signal and the second signal when the gap is at the near gap.

8. The position detection device according to claim 7, wherein

the offset of the first signal includes a first static offset which is an offset component independent of a change in an amplitude of the first signal, and a first variable offset which is an offset component which changes according to the change in the amplitude of the first signal,

the offset of the second signal includes a second static offset which is an offset component independent of a change in an amplitude of the second signal, and a second variable offset which is an offset component which changes according to the change in the amplitude of the second signal,

the signal correction unit is configured to

adjust the first static offset such that a relationship between an amount of change in the amplitude of the first signal and an amount of change in the offset of the first signal based on the amount of change in the amplitude of the first signal becomes proportional, and

adjust the second static offset such that a relationship between an amount of change in the amplitude of the second signal and an amount of change in the offset of the second signal based on the amount of change in the amplitude of the second signal becomes proportional, and

the section correction unit is configured to correct the pre-correction detection body position calculated by the position calculation unit for each of the sections such that the primary component included in the detection body position calculated by performing the arc tangent conversion on the first signal and the second signal is removed.

9. The position detection device according to claim 2 or 3, wherein

the arrangement unit is a substrate,
the signal output unit is provided on the substrate and includes a transmission coil (31), a first reception coil (32) and a second reception coil (33),
the first reception coil and the second reception coil are configured to be inductively coupled with the transmission coil by electromagnetic induction caused by energization to the transmission coil,
the first reception coil is configured to output a first voltage value as the first signal corresponding to the detection body position, the first voltage value changing due to an influence of an eddy current induced in the detection body by the electromagnetic induction from the energized transmission coil,
the second reception coil is configured to output a second voltage value as the second signal corresponding to the position of the detection body, the second voltage value changing due to the influence of the eddy current induced in the detection body by the electromagnetic induction from the energized transmission coil, and
the signal processing unit is configured to calculate the detection body position based on the first voltage value and the second voltage value.

10. The position detection device according to claim 2 or 3, wherein

the arrangement unit is a substrate,
the signal output unit is provided on the substrate and includes a first reception coil (32) and a second reception coil (33) which are configured to be changed in inductance according to the detection body position,
the first reception coil is configured to output the first signal as an inductance change of the first reception coil that changes according to the detection body position,
the second reception coil is configured to output the second signal as an inductance change of the second reception coil that changes according to the detection body position, and
the signal processing unit is configured to calculate the detection body position based on the inductance change of the first reception coil and the inductance change of the second reception coil.

11. The position detection device according to claim 9, wherein
the first reception coil and the second reception coil include a portion having a spiral pattern shape.

12. The position detection device according to claim 9, wherein
one of the first reception coil and the second reception coil has a shape that follows a sine curve pattern, and the other of the first reception coil and the second reception coil has a shape that follows a cosine curve pattern different in phase from the sine curve pattern.

13. The position detection device according to claim 2 or 3, wherein

the detection body has a magnet (110, 120, 130), and
the signal output unit includes a first magnetic detection unit (61) and a second magnetic detection unit (62) which are configured to output the first signal and the second signal, respectively, based on a change in a magnetic field received from the magnet that changes according to the detection body position.

# FIG. 1

# FIG. 2

# FIG. 3

# FIG. 4

# FIG. 5

EP 4 621 355 A1

# FIG. 6

a : 2mm_Si     f : 2mm_Co     b : 2.5mm_Si     g : 2.5mm_Co

c : 3mm_Si     h : 3mm_Co     d : 3.5mm_Si     i : 3.5mm_Co

e : 4mm_Si     j : 4mm_Co

EP 4 621 355 A1

# FIG. 7

EP 4 621 355 A1

# FIG. 8

a : 2mm_Si          f : 2mm_Co          b : 2.5mm_Si          g : 2.5mm_Co

c : 3mm_Si          h : 3mm_Co          d : 3.5mm_Si          i : 3.5mm_Co

e : 4mm_Si          j : 4mm_Co

FIG. 9

# FIG. 10

A: 2mm    B: 2.5mm    C: 3mm    D: 3.5mm    E: 4mm

EP 4 621 355 A1

# FIG. 11

A: 2mm     B: 2.5mm     C: 3mm     D: 3.5mm     E: 4mm

EP 4 621 355 A1

# FIG. 12

# FIG. 13

A: 2mm    B: 2.5mm    C: 3mm    D: 3.5mm    E: 4mm

EP 4 621 355 A1

**FIG. 14**

EP 4 621 355 A1

FIG. 15

# FIG. 16

# FIG. 17

STROKE DIRECTION

FIG. 18

EP 4 621 355 A1

**FIG. 19**

A: 2mm    B: 2.5mm    C: 3mm    D: 3.5mm    E: 4mm

# FIG. 20

A: 2 mm    B: 2.5 mm    C: 3 mm    D: 3.5 mm    E: 4 mm

EP 4 621 355 A1

# FIG. 21

# EP 4 621 355 A1

## INTERNATIONAL SEARCH REPORT

International application No.

**PCT/JP2023/037549**

| A. | CLASSIFICATION OF SUBJECT MATTER |
|---|---|

*G01D 5/244*(2006.01)i; *G01D 5/245*(2006.01)i
FI:　G01D5/244 H; G01D5/245 E; G01D5/245 110R

According to International Patent Classification (IPC) or to both national classification and IPC

| B. | FIELDS SEARCHED |
|---|---|

Minimum documentation searched (classification system followed by classification symbols)

G01D5/12-245; G01B7/00-7/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2009-8515 A (TAMAGAWA SEIKI CO., LTD.) 15 January 2009 (2009-01-15) paragraphs [0023]-[0030], fig. 1-3 | 1-13 |
| A | JP 2005-156565 A (GENERAL ELECTRIC CO.) 16 June 2005 (2005-06-16) paragraphs [0008]-[0039], fig. 1-4 | 1-13 |
| A | JP 2017-207319 A (DENSO CORP.) 24 November 2017 (2017-11-24) paragraphs [0025]-[0039], fig. 1-3 | 1-13 |
| A | JP 2003-156365 A (TAMAGAWA SEIKI CO., LTD.) 30 May 2003 (2003-05-30) paragraphs [0008]-[0014], fig. 1 | 1-13 |
| A | US 2019/0063954 A1 (KSP IP HOLDINGS, LLC) 28 February 2019 (2019-02-28) paragraphs [0016]-[0049], fig. 1-4B | 1-13 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 December 2023** | **26 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

| INTERNATIONAL SEARCH REPORT<br>Information on patent family members | | | International application No.<br>**PCT/JP2023/037549** | |

| Patent document<br>cited in search report | Publication date<br>(day/month/year) | Patent family member(s) | Publication date<br>(day/month/year) |
|---|---|---|---|
| JP    2009-8515    A | 15 January 2009 | US    2010/0125430    A1<br>paragraphs [0079]-[0093], fig.<br>1-3<br>WO    2009/001487    A1<br>EP    2161827    A1<br>CN    101682282    A | |
| JP    2005-156565    A | 16 June 2005 | US    2005/0114052    A1<br>paragraphs [0012]-[0048], fig.<br>1-4<br>EP    1536202    A1 | |
| JP    2017-207319    A | 24 November 2017 | WO    2017/199648    A1 | |
| JP    2003-156365    A | 30 May 2003 | (Family: none) | |
| US    2019/0063954    A1 | 28 February 2019 | WO    2019/046447    A1<br><br>KR    10-2020-0037329    A<br>CN    111033183    A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022183453 A
- JP 2023166407 A
- JP 2022016309 A